(19) Europäisches Patentamt
European Patent Office
Office européen des brevets

(11) **EP 3 855 746 A1**

(12) **EUROPEAN PATENT APPLICATION**
published in accordance with Art. 153(4) EPC

(43) Date of publication:
**28.07.2021 Bulletin 2021/30**

(51) Int Cl.:
**H04N 19/53** *(2014.01)*          **H04N 19/109** *(2014.01)*
**H04N 19/105** *(2014.01)*          **H04N 19/176** *(2014.01)*

(21) Application number: **19863682.1**

(86) International application number:
**PCT/KR2019/012159**

(22) Date of filing: **19.09.2019**

(87) International publication number:
**WO 2020/060236 (26.03.2020 Gazette 2020/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.09.2018 US 201862733867 P**

(71) Applicant: **Samsung Electronics Co., Ltd.
Gyeonggi-do 16677 (KR)**

(72) Inventors:
• **TAMSE, Anish**
  **Suwon-Si, Gyeonggi-do 16677 (KR)**
• **PARK, Minwoo**
  **Suwon-Si, Gyeonggi-do 16677 (KR)**
• **CHOI, Kiho**
  **Suwon-Si, Gyeonggi-do 16677 (KR)**

(74) Representative: **Appleyard Lees IP LLP
15 Clare Road
Halifax HX1 2HY (GB)**

(54) **VIDEO DECODING METHOD AND DEVICE, AND VIDEO ENCODING METHOD AND DEVICE**

(57)    Provided are a video decoding method and device, in which, during video encoding and decoding processes: information about whether to apply an affine mode to a current block is received; when the information about whether to apply the affine mode indicates that the affine mode is to be applied, an affine parameter group is determined based on a history-based affine parameter group candidate list in which affine parameter groups of one or more blocks reconstructed in an affine mode before the current block are stored; and prediction on the current block is performed based on the affine parameter group.

FIG. 20

**Description**

TECHNICAL FIELD

The disclosure relates to a video decoding method and a video decoding device, and more particularly, to a video encoding method and device and a video decoding method and device, in which, when an affine mode is to be applied to a current block, an affine parameter group is determined based on a history-based affine parameter group candidate list in which affine parameter groups of one or more blocks reconstructed in an affine mode before the current block are stored, and prediction is performed on the current block based on the determined affine parameter group.

Also, the disclosure relates to a video encoding method and device and a video decoding method and device, in which: it is determined whether a current block is a block to be reconstructed first in a predetermined area in which the current block is included; when the current block is the block to be reconstructed first, a history-based motion vector candidate list in which motion vectors of blocks reconstructed before the current block are stored is reset and prediction on the current block is peformed based on motion information of an adjacent block to the current block; and when the current block is not the block to be reconstructed first, prediction is performed on the current block based on the motion information of the adjacent block to the current block and the history-based motion vector candidate list.

BACKGROUND ART

Image data is encoded by a codec according to a preset data compression standard, for example, a moving picture experts group (MPEG) standard, and then stored in the form of a bitstream in a recording medium or transmitted through a communication channel.

With the development and propagation of hardware capable of reproducing and storing high-resolution or high-definition image content, the need for a codec for effectively encoding or decoding high-resolution or high-definition image content is increasing. Encoded image data may be reproduced by being decoded. Recently, methods for effectively compressing such high-resolution or high-definition image content have been implemented. For example, it has been proposed that image compression technology may be effectively implemented through a process of segmenting an image to be encoded by an arbitrary method or rendering data.

As one of the techniques for rendering data, a method of performing prediction on a current block by using surrounding information of the current block is generally used.

DESCRIPTION OF EMBODIMENTS

TECHNICAL PROBLEM

Provided are a method and device, in which, during video encoding and decoding processes, when an affine mode is to be applied to a current block, an affine parameter group is determined based on a history-based affine parameter group candidate list in which affine parameter groups of one or more blocks reconstructed in an affine mode before the current block are stored, and prediction is performed on the current block, based on the determined affine parameter group.

Also, provided are a method and a device, in which: during video encoding and decoding processes, it is determined whether a current block is a block to be reconstructed first in a predetermined area in which the current block is included; when the current block is the block to be reconstructed first, a history-based motion vector candidate list in which motion vectors of blocks reconstructed before the current block are stored is reset and prediction is performed on the current block, based on motion information of an adjacent block to the current block; and when the current block is not the block to be reconstructed first, prediction is performed on the current block, based on the motion information of the adjacent block to the current block and the history-based motion vector candidate list.

SOLUTION TO PROBLEM

To overcome the above-described technical problems, a video decoding method proposed in the disclosure includes: receiving information about whether to apply an affine mode to a current block; when the information about whether to apply the affine mode indicates that the affine mode is to be applied, determining an affine parameter group based on a history-based affine parameter group candidate list in which affine parameter groups of one or more blocks reconstructed in an affine mode before the current block are stored; and performing prediction on the current block, based on the affine parameter group.

To overcome the above-described technical problems, a video decoding device proposed in the disclosure includes: a memory; and at least one processor connected to the memory, and the at least one processor is configured

**EP 3 855 746 A1**

to: receive information about whether to apply an affine mode to a current block; when the information about whether to apply the affine mode indicates that the affine mode is to be applied, determine an affine parameter group based on a history-based affine parameter group candidate list in which affine parameter groups of one or more blocks reconstructed in an affine mode before the current block are stored, and perform prediction on the current block, based on the affine parameter group.

To overcome the above-described technical problems, a video encoding method proposed in the disclosure includes: determining whether to apply an affine mode to a current block; when it is determined that the affine mode is to be applied to the current block, determining an affine parameter group based on a history-based affine parameter group candidate list in which affine parameter groups of one or more blocks encoded in an affine mode before the current block are stored; performing prediction on the current block, based on the affine parameter group; and encoding information about whether to apply the affine mode to the current block.

To overcome the above-described technical problems, a video encoding device proposed in the disclosure includes a memory, and at least one processor connected to the memory, and the at least one processor is configured to: determine whether to apply an affine mode to a current block; when it is determined that the affine mode is to be applied to the current block, determine an affine parameter group based on a history-based affine parameter group candidate list in which affine parameter groups of one or more blocks encoded in an affine mode before the current block are stored; perform prediction on the current block, based on the affine parameter group; and encode information about whether to apply the affine mode to the current block.

To overcome the above-described technical problems, a video decoding method proposed in the disclosure includes: determining whether a current block is a block to be reconstructed first in a predetermined area in which the current block is included; when the current block is the block to be reconstructed first, resetting a history-based motion vector candidate list in which motion vectors of blocks reconstructed before the current block are stored and performing prediction on the current block, based on motion information of an adjacent block to the current block; and when the current block is not the block to be reconstructed first, performing prediction on the current block, based on the motion information of the adjacent block to the current block and the history-based motion vector candidate list.

To overcome the above-described technical problems, a video decoding device proposed in the disclosure includes: a memory; and at least one processor connected to the memory, and the at least one processor is configured to: determine whether a current block is a block to be reconstructed first in a predetermined area in which the current block is included; when the current block is the block to be reconstructed first, reset a history-based motion vector candidate list in which motion vectors of blocks reconstructed before the current block are stored and perform prediction on the current block based on motion information of an adjacent block to the current block; and when the current block is not the block to be reconstructed first, perform prediction on the current block, based on the motion information of the adjacent block to the current block and the history-based motion vector candidate list.

To overcome the above-described technical problems, a video encoding method proposed in the disclosure includes: determining whether a current block is a block to be encoded first in a predetermined area in which the current block is included; when the current block is the block to be encoded first, resetting a history-based motion vector candidate list in which motion vectors of blocks encoded before the current block are stored and performing prediction on the current block based on motion information of an adjacent block to the current block; and when the current block is not the block to be encoded first, performing prediction on the current block, based on the motion information of the adjacent block to the current block and the history-based motion vector candidate list.

To overcome the above-described technical problems, a video encoding device proposed in the disclosure includes a memory, and at least one processor connected to the memory, and the at least one processor is configured to: determine whether a current block is a block to be encoded first in a predetermined area in which the current block is included; when the current block is the block to be encoded first, reset a history-based motion vector candidate list in which motion vectors of blocks encoded before the current block are stored and perform prediction on the current block based on motion information of an adjacent block to the current block; and when the current block is not the block to be encoded first, perform prediction on the current block, based on the motion information of the adjacent block to the current block and the history-based motion vector candidate list.

ADVANTAGEOUS EFFECTS OF DISCLOSURE

During video encoding and decoding processes, when an affine mode is to be applied to a current block, an affine parameter group is determined based on a history-based affine parameter group candidate list in which affine parameter groups of one or more blocks reconstructed in an affine mode before the current block are stored, and prediction is performed on the current block based on the determined affine parameter group, and thus the amount of buffer may be reduced.

Also, when a current block is a block to be reconstructed first in a predetermined area in which the current block is included, a history-based motion vector candidate list in which motion vectors of blocks reconstructed before

3

the current block are stored is reset, and the history-based motion vector candidate list is used for each predetermined area, and thus the amount of buffer may be reduced and efficient parallel processing may be performed.

BRIEF DESCRIPTION OF DRAWINGS

FIG. 1 illustrates a schematic block diagram of an image decoding device according to an embodiment.

FIG. 2 illustrates a flowchart of an image decoding method according to an embodiment.

FIG. 3 illustrates a process, performed by an image decoding device, of determining at least one coding unit by splitting a current coding unit, according to an embodiment.

FIG. 4 illustrates a process, performed by an image decoding device, of determining at least one coding unit by splitting a non-square coding unit, according to an embodiment.

FIG. 5 illustrates a process, performed by an image decoding device, of splitting a coding unit based on at least one of block shape information and split shape mode information, according to an embodiment.

FIG. 6 illustrates a method, performed by an image decoding device, of determining a preset coding unit from among an odd number of coding units, according to an embodiment.

FIG. 7 illustrates an order of processing a plurality of coding units when an image decoding device determines the plurality of coding units by splitting a current coding unit, according to an embodiment.

FIG. 8 illustrates a process, performed by an image decoding device, of determining that a current coding unit is to be split into an odd number of coding units, when the coding units are not processable in a preset order, according to an embodiment.

FIG. 9 illustrates a process, performed by an image decoding device, of determining at least one coding unit by splitting a first coding unit, according to an embodiment.

FIG. 10 illustrates that a shape into which a second coding unit is splittable is restricted when the second coding unit having a non-square shape, which is determined when an image decoding device splits a first coding unit, satisfies a preset condition, according to an embodiment.

FIG. 11 illustrates a process, performed by an image decoding device, of splitting a square coding unit when split shape mode information indicates that the square coding unit is not to be split into four square coding units, according to an embodiment.

FIG. 12 illustrates that a processing order between a plurality of coding units may be changed depending on a process of splitting a coding unit, according to an embodiment.

FIG. 13 illustrates a process of determining a depth of a coding unit as a shape and size of the coding unit change, when the coding unit is recursively split such that a plurality of coding units are determined, according to an embodiment.

FIG. 14 illustrates depths that are determinable based on shapes and sizes of coding units, and part indexes (PIDs) that are for distinguishing the coding units, according to an embodiment.

FIG. 15 illustrates that a plurality of coding units are determined based on a plurality of preset data units included in a picture, according to an embodiment.

FIG. 16 illustrates a processing block serving as a unit for determining a determination order of reference coding units included in a picture, according to an embodiment.

FIG. 17 illustrates a block diagram of a video encoding device according to an embodiment.

FIG. 18 is a flowchart illustrating a video encoding method according to an embodiment.

FIG. 19 illustrates a block diagram of a video decoding device according to an embodiment.

FIG. 20 illustrates a flowchart of a video decoding method according to an embodiment.

FIG. 21A illustrates a schematic diagram of history-based motion vector prediction (HMVP).

FIG. 21B illustrates a process of processing a list used for HMVP.

FIG. 22A illustrates in detail a method of deriving a motion vector applied to a sample of a current block in an affine mode. FIG. 22B illustrates a method of deriving an affine parameter group from surrounding information in an affine mode.

FIG. 23 illustrates a method of determining an affine parameter group candidate of a current block based on a history-based affine parameter group candidate list.

FIG. 24 illustrates a flowchart of a video encoding method according to another embodiment.

FIG. 25 illustrates a flowchart of a video decoding method according to another embodiment.

FIG. 26 illustrates a line buffer required to access motion information at a boundary of a largest coding unit.

FIG. 27A illustrates an example of identifying each area having a history-based motion vector candidate list in one frame.

FIG. 27B illustrates another example of identifying each area having a history-based motion vector candidate list in one frame.

FIG. 28 illustrates a method of determining a method of determining a motion vector of a current block in an affine mode.

BEST MODE

A video decoding method according to an embodiment proposed in the disclosure includes: receiving information about whether to apply an affine mode to a current block; when the information about whether to apply the affine mode indicates that the affine mode is to be applied, determining an affine parameter group based on a history-based affine parameter group candidate list in which affine parameter groups of one or more blocks reconstructed in an affine mode before the current block are stored; and performing prediction on the current block, based on the affine parameter group.

According to an embodiment, when an adjacent block reconstructed in an affine mode exists from among adjacent blocks to the current block, the affine parameter group may be determined based on affine parameter information of the adjacent block reconstructed in the affine mode and the history-based affine parameter group candidate list.

According to an embodiment, the video decoding method may further include adding the affine parameter group of the current block to the history-based affine parameter group candidate list.

According to an embodiment, the video decoding method may further include, when adding the affine parameter group of the current block to the history-based affine parameter group candidate list, in a case where a number of candidates included in the history-based affine parameter group candidate list is a predetermined maximum value, removing the earliest-stored affine parameter candidate from the history-based affine parameter group candidate list.

According to an embodiment, when adding the affine parameter group of the current block to the history-based affine parameter group candidate list, in a case where the affine parameter group of the current block is the same as an affine parameter group existing in the history-based affine parameter group candidate list, maintaining the history-based affine parameter group candidate list.

According to an embodiment, the affine mode may indicate an affine merge mode or an affine advanced motion vector prediction (AMVP) mode.

A video encoding method according to an embodiment proposed in the disclosure includes: determining whether to apply an affine mode to a current block; when it is determined that the affine mode is to be applied to the current block, determining an affine parameter group based on a history-based affine parameter group candidate list in which affine parameter groups of one or more blocks encoded in an affine mode before the current block are stored; performing prediction on the current block, based on the affine parameter group; and encoding information about whether to apply the affine mode to the current block.

According to an embodiment, when an adjacent block encoded in an affine mode exists from among adjacent blocks to the current block, the affine parameter group may be determined based on affine parameter information of the adjacent block encoded in the affine mode and the history-based affine parameter group candidate list.

A video decoding method according to another embodiment proposed in the disclosure includes: determining whether a current block is a block to be reconstructed first in a predetermined area in which the current block is included; when the current block is the block to be reconstructed first, resetting a history-based motion vector candidate list in which motion vectors of blocks reconstructed before the current block are stored and performing prediction on the current block based on motion information of an adjacent block to the current block; and when the current block is not the block to be reconstructed first, performing prediction on the current block, based on the motion information of the adjacent block to the current block and the history-based motion vector candidate list.

According to an embodiment, the video decoding method may further include storing a motion vector of the current block in the history-based motion vector candidate list.

According to an embodiment, the video decoding method may further include, when storing the motion vector of the current block in the history-based motion vector candidate list, in a case where a number of motion vector candidates stored in the history-based motion vector candidate list is a predetermined maximum value, removing a motion vector of the earliest-stored block from the history-based motion vector candidate list.

According to an embodiment, the video decoding method may further include, when storing the motion vector of the current block in the history-based motion vector candidate list, in a case where the motion vector of the current block is the same as a motion vector existing in the history-based motion vector candidate list, maintaining the history-based motion vector candidate list.

MODE OF DISCLOSURE

The advantages and features of the disclosure and methods of achieving the advantages and features will be described more fully with reference to the accompanying drawings, in which embodiments of the disclosure are shown. The disclosure may, however, be embodied in many different forms and should not be construed as being limited to the embodiments set forth herein; rather these embodiments are provided so that the disclosure will be thorough and complete, and will fully convey the concept of the disclosure to one of ordinary skill in the art.

The terms used herein will be briefly described, and disclosed embodiments will be described in detail.

The terms used herein are those general terms currently widely used in the art in consideration of functions in the disclosure, but the terms may vary according to the intention of one of ordinary skill in the art, precedents, or new technology in the art. Also, some of the terms used herein may be arbitrarily chosen by the present applicant, and in this case, these terms are defined in detail below. Accordingly, the specific terms used herein should be defined based on the unique meanings thereof and the whole context of the disclosure.

It is to be understood that the singular forms "a," "an," and "the" include plural referents unless the context clearly dictates otherwise.

It will be understood that when a certain part "includes" a certain component, the part does not exclude another component but may further include another component, unless the context clearly dictates otherwise.

Also, the term "unit" used herein refers to a software component or a hardware component, which performs certain tasks. However, the term "unit" is not limited to software or hardware. A "unit" may be configured to be in an addressable storage medium or configured to operate one or more processors. Thus, a "unit" may include, by way of example, components such as software components, object-oriented software components, class components, and task components, processes, functions, attributes, procedures, subroutines, segments of program code, drivers, firmware, microcode, circuitry, data, databases, data structures, tables, arrays, and variables. The functionality provided by the components and "units" may be combined into fewer components and "units" or further separated into additional components and "units".

According to an embodiment of the disclosure, the "unit" may include a processor and a memory. The term "processor" should be interpreted broadly to include a general purpose processor, a central processing unit (CPU), a microprocessor, a digital signal processor (DSP), a controller, a microcontroller, a state machine, etc. In some circumstances, the "processor" may refer to an application specific semiconductor (ASIC), a programmable logic device (PLD), a field programmable gate array (FPGA), etc. The term "processor" may refer to a combination of processing devices such as, for example, a combination of a DSP and a microprocessor, a combination of a plurality of microprocessors, a combination of one or more microprocessors in conjunction with a DSP core, or a combination of any other such configuration.

The term "memory" should be interpreted broadly to include any electronic component capable of storing electronic information. The term "memory" may refer to various types of processor-readable media, such as a random access memory (RAM), a read-only memory (ROM), a non-volatile random access memory (NVRAM), a programmable read-only memory (PROM), an erase-programmable read-only memory (EPROM), an electrically erasable PROM (EEPROM), a flash memory, a magnetic or optical data storage device, a register, etc. When the processor can read information from a memory and/or write information to the memory, the memory is said to be in an electronic communication state with the processor. The memory integrated in the processor is in an electronic communication state with the processor.

Hereinafter, an "image" may indicate a still image of a video or may indicate a dynamic image such as a moving image, that is, the video itself.

Hereinafter, a "sample" denotes data assigned to a sampling location of an image, i.e., data to be processed. For example, pixel values of an image in a spatial domain and transform coefficients on a transform region may be samples. A unit including at least one such sample may be defined as a block.

Also, in the present specification, a "current block" may denote a block of a largest coding unit, a coding unit, a prediction unit, or a transform unit of a current image to be encoded or decoded.

The disclosure will now be described more fully with reference to the accompanying drawings for one of ordinary skill in the art to be able to perform the disclosure without any difficulty. Also, portions irrelevant to the descriptions of the disclosure will be omitted in the drawings for clear descriptions of the disclosure.

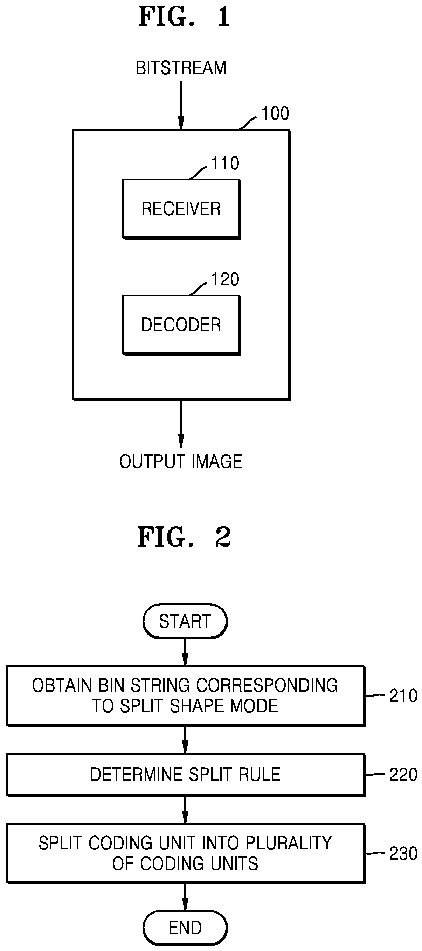

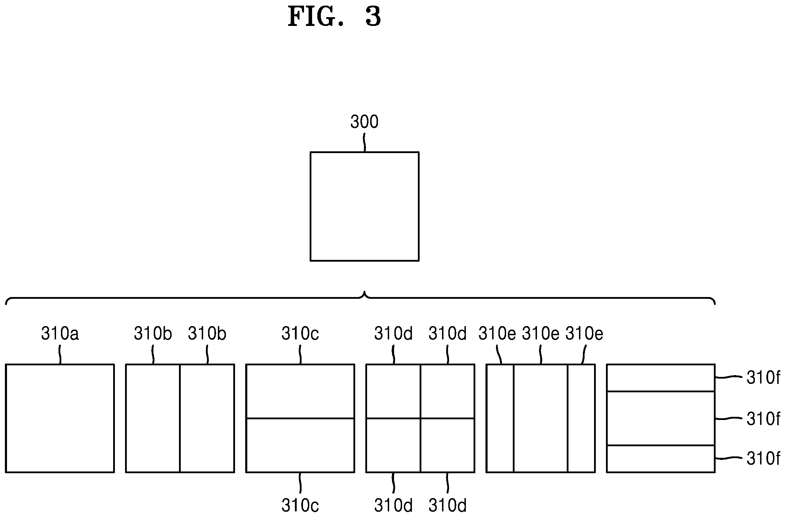

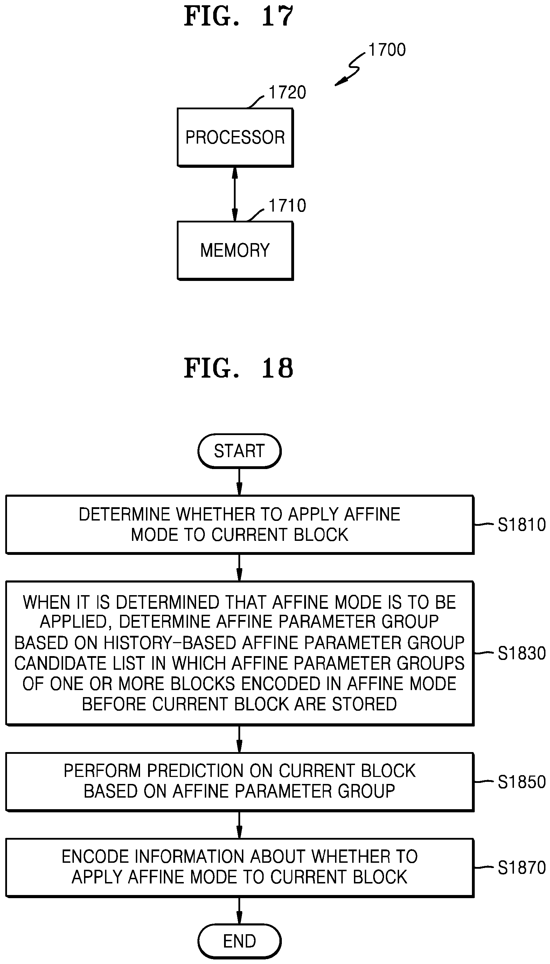

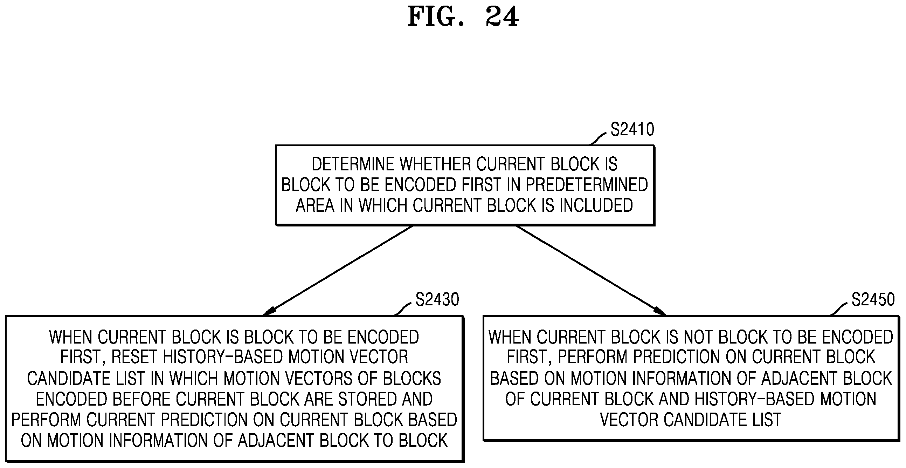

Hereinafter, an image encoding device, an image decoding device, an image encoding method, and an image decoding method, according to an embodiment, will be described with reference to FIGS. 1 to 16. A method of determining a data unit of an image according to an embodiment, will be described with reference to FIGS. 3 through 16. A video encoding/decoding method according to an embodiment, which receives information about whether to apply an affine mode to a current block, when the information about whether to apply the affine mode indicates that the affine mode is to be applied, determines an affine parameter group based on a history-based affine parameter group candidate list in which affine parameter groups of one or more blocks reconstructed in an affine mode before the current block are stored, and performs prediction on the current block based on the affine parameter group, will be described below with reference to FIGS. 17 to 23 and 28. A video encoding/decoding method, which determines whether a current block is a block to be reconstructed first in a predetermined area in which the current block is included, when the current block is the block to be reconstructed first, resets a history-based motion vector candidate list in which motion vectors of blocks reconstructed before the current block are stored and performs prediction on the current block based on motion information of an adjacent block to the current block, and when the current block is not the block to be reconstructed first, performs prediction on the current block based on the motion information of the adjacent block to the current block and the history-based motion vector candidate list, will be described with reference to FIGS. 24 to 27.

Hereinafter, a method and device for adaptively selecting a context model, based on various shapes of coding units, according to an embodiment of the disclosure, will be described with reference to FIGS. 1 and 2.

FIG. 1 illustrates a schematic block diagram of an image decoding device according to an embodiment.

The image decoding device 100 may include a receiver 110 and a decoder 120. The receiver 110 and the decoder 120 may include at least one processor. Also, the receiver 110 and the decoder 120 may include a memory storing instructions to be performed by the at least one processor.

The receiver 110 may receive a bitstream. The bitstream includes information on an image encoded by an image encoding device 2200 described below. Also, the bitstream may be transmitted from the image encoding device 2200. The image encoding device 2200 and the image decoding device 100 may be connected via wires or wirelessly, and the receiver 110 may receive the bitstream via wires or wirelessly. The receiver 110 may receive the bitstream from a storage medium, such as an optical medium or a hard disk. The decoder 120 may reconstruct an image based on information obtained from the received bitstream. The decoder 120 may obtain, from the bitstream, a syntax element for reconstructing the image. The decoder 120 may reconstruct the image based on the syntax element.

Operations of the image decoding device 100 will be described in detail with reference to FIG. 2.

FIG. 2 illustrates a flowchart of an image decoding method according to an embodiment.

According to an embodiment of the disclosure, the receiver 110 receives a bitstream.

The image decoding device 100 obtains, from a bitstream, a bin string corresponding to a split shape mode of a coding unit (operation 210). The image decoding device 100 determines a split rule of coding units (operation 220). Also, the image decoding device 100 splits the coding unit into a plurality of coding units, based on at least one of the bin string corresponding to the split shape mode and the split rule (operation 230). The image decoding device 100 may determine an allowable first range of a size of the coding unit, according to a ratio of the width and the height of the coding unit, so as to determine the split rule. The image decoding device 100 may determine an allowable second range of the size of the coding unit, according to the split shape mode of the coding unit, so as to determine the split rule.

Hereinafter, splitting of a coding unit will be described in detail according to an embodiment of the disclosure.

First, one picture may be split into one or more slices or one or more tiles. One slice or one tile may be a sequence of one or more largest coding units (coding tree units (CTUs)). There is a largest coding block (coding tree block (CTB)) conceptually compared to a largest coding unit (CTU).

The largest coding block (CTB) denotes an NxN block including NxN samples (where N is an integer). Each color component may be split into one or more largest coding blocks.

When a picture has three sample arrays (sample arrays for Y, Cr, and Cb components), a largest coding unit (CTU) includes a largest coding block of a luma sample, two corresponding largest coding blocks of chroma samples, and syntax structures used to encode the luma sample and the chroma samples. When a picture is a monochrome picture, a largest coding unit includes a largest coding block of a monochrome sample and syntax structures used to encode the monochrome samples. When a picture is a picture encoded in color planes separated according to color components, a largest coding unit includes syntax structures used to encode the picture and samples of the picture.

One largest coding block (CTB) may be split into MxN coding blocks including MxN samples (M and N are integers).

When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the picture.

As described above, a largest coding block and a largest coding unit are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a preset size including a preset number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, the embodiment is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y: Cb: Cr ratio is 4:2:0 according to a color format, a size of a chroma block may be half a size of a luma block, and a size of a chroma largest coding unit may be half a size of a luma largest coding unit.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-picture may be 32x32, and the maximum size of the luma coding block that is ternary splittable in a P-picture or a B-picture may be 64x64.

Also, a largest coding unit may be hierarchically split into coding units based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode (SPLIT_TT_VER).

The image decoding device 100 may obtain, from the bitstream, the split shape mode information from one bin string. A form of the bitstream received by the image decoding device 100 may include fixed length binary code, unary code, truncated unary code, predetermined binary code, or the like. The bin string is information in a binary number. The bin string may include at least one bit. The image decoding device 100 may obtain the split shape mode information corresponding to the bin string, based on the split rule. The image decoding device 100 may determine whether to quad split a coding unit, whether not to split a coding unit, a split direction, and a split type, based on one bin string.

The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 through 16.

Also, one or more prediction blocks for prediction may be determined from a coding unit. The prediction block may be the same as or smaller than the coding unit. Also, one or more transform blocks for transformation may be determined from a coding unit. The transform block may be the same as or smaller than the coding unit.

The shapes and sizes of the transform block and prediction block may not be related to each other.

In another embodiment, prediction may be performed by using a coding unit as a prediction unit. Also, transformation may be performed by using a coding unit as a transform block.

The splitting of the coding unit will be described in detail with reference to FIGS. 3 through 16. A current block and an adjacent block of the disclosure may indicate one of the largest coding unit, the coding unit, the prediction block, and the transform block. Also, the current block of the current coding unit is a block that is currently being decoded or encoded or a block that is currently being split. The adjacent block may be a block reconstructed before the current block. The adjacent block may be adjacent to the current block spatially or temporally. The adjacent block may be located at one of the lower left, left, upper left, top, upper right, right, lower right of the current block.

FIG. 3 illustrates a process, performed by an image decoding device, of determining at least one coding unit by splitting a current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height, or size of a coding unit.

The shape of the coding unit may include a square and a non-square. When the lengths of the width and height of the coding unit are the same (i.e., when the block shape of the coding unit is 4Nx4N), the image decoding device 100 may determine the block shape information on the coding unit as a square. The image decoding device 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding device 100 may determine the block shape information on the coding unit as a non-square shape. When the shape of the coding unit is non-square, the image decoding device 100 may determine the ratio of the width and height among the block shape information on the coding unit to be at least one of 1:2, 2:1, 1:4, 4:1, 1:8, 8:1, 1:16, 16:1, 1:32, and 32:1. Also, the image decoding device 100 may determine whether the coding unit is in a horizontal direction or a vertical direction, based on the length of the width and the length of the height of the coding unit. Also, the image decoding device 100 may determine the size of the coding unit, based on at least one of the length of the width, the length of the height, or the area of the coding unit.

According to an embodiment, the image decoding device 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding device 100.

The image decoding device 100 may obtain the split shape mode information from a bitstream. However, an embodiment is not limited thereto, and the image decoding device 100 and the image encoding device 2200 may determine pre-agreed split shape mode information, based on the block shape information. The image decoding device 100 may determine the pre-agreed split shape mode information with respect to a largest coding unit or a smallest coding unit. For example, the image decoding device 100 may determine split shape mode information with respect to the largest coding unit to be a quad split. Also, the image decoding device 100 may determine split shape mode information regarding the smallest coding unit to be "not to perform splitting". In particular, the image decoding device 100 may determine the size of the largest coding unit to be 256x256. The image decoding device 100 may determine the pre-agreed split shape mode information to be a quad split. The quad split is a split shape mode in which the width and the height of the coding unit are both bisected. The image decoding device 100 may obtain a coding unit of a 128x128 size from the largest coding unit of a 256x256 size, based on the split shape mode information. Also, the image decoding device 100 may determine the size of the smallest coding unit to be 4x4. The image decoding device 100 may obtain split shape mode information indicating "not to perform splitting" with respect to the smallest coding unit.

According to an embodiment, the image decoding device 100 may use the block shape information indicating that the current coding unit has a square shape. For example, the image decoding device 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information on a current coding unit 300 indicates a square shape, the decoder 120 may determine that a coding unit 310a having the same size as the current coding unit 300 is not split, based on the split shape mode information indicating not to perform splitting, or may determine coding units 310b, 310c, 310d, 310e, or 310f split based on the split shape mode information indicating a preset splitting method.

Referring to FIG. 3, according to an embodiment, the image decoding device 100 may determine two coding units 310b obtained by splitting the current coding unit 300 in a vertical direction, based on the split shape mode information indicating to perform splitting in a vertical direction. The image decoding device 100 may determine two coding units 310c obtained by splitting the current coding unit 300 in a horizontal direction, based on the split shape mode information indicating to perform splitting in a horizontal direction. The image decoding device 100 may determine four coding units 310d obtained by splitting the current coding unit 300 in vertical and horizontal directions, based on the split shape mode information indicating to perform splitting in vertical and horizontal directions. According to an embodiment, the image decoding device 100 may determine three coding units 310e obtained by splitting the current coding unit 300 in a vertical direction, based on the split shape mode information indicating to perform ternary splitting in a vertical direction. The image decoding device 100 may determine three coding units 310f obtained by splitting the current coding unit 300 in a horizontal direction, based on the split shape mode information indicating to perform ternary splitting in a horizontal direction. However, splitting methods of the square coding unit are not limited to the above-described methods, and the split shape mode information may indicate various methods. Preset splitting methods of splitting the square coding unit will be described in detail below in relation to various embodiments.

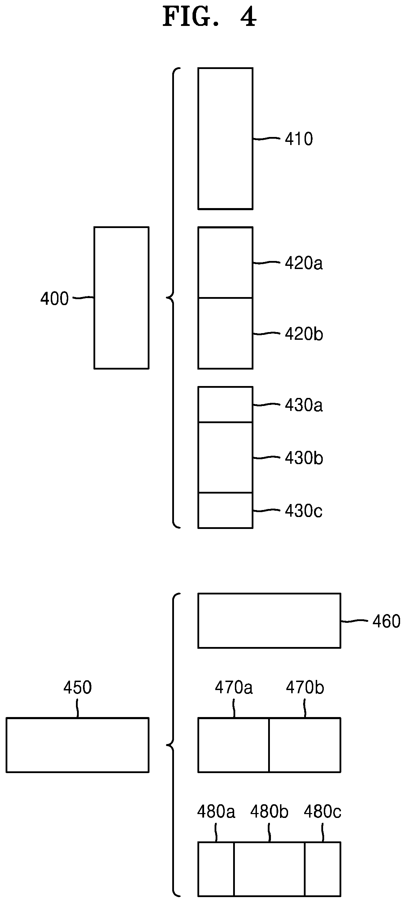

FIG. 4 illustrates a process, performed by an image decoding device, of determining at least one coding unit by splitting a non-square coding unit, according to an embodiment.

According to an embodiment, the image decoding device 100 may use block shape information indicating that a current coding unit has a non-square shape. The image decoding device 100 may determine whether not to split the non-square current coding unit or whether to split the non-square current coding unit by using a preset splitting method, based on split shape mode information. Referring to FIG. 4, when the block shape information on a current coding unit 400 or 450 indicates a non-square shape, the image decoding device 100 may determine a coding unit 410 or 460 having the same size as the current coding unit 400 or 450, based on the split shape mode information indicating not to perform splitting, or determine coding units 420a and 420b, 430a to 430c, 470a and 470b, or 480a to 480c split based on the split shape mode information indicating a preset splitting method. Preset splitting methods of splitting a non-square coding unit will be described in detail below in relation to various embodiments.

According to an embodiment, the image decoding device 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding device 100 may determine two coding units 420a and 420b, or 470a and 470b included in the current coding unit 400 or 450, by splitting the current coding unit 400 or 450 based on the split shape mode information.

According to an embodiment, when the image decoding device 100 splits the non-square current coding unit 400 or 450 based on the split shape mode information, the image decoding device 100 may consider the location of a long side of the non-square current coding unit 400 or 450 to split a current coding unit. For example, the image decoding device 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (ternary split) a coding unit into an odd number of blocks, the image decoding device 100 may determine an odd number of coding units included in the current coding unit 400 or 450. For example, when the split shape mode information indicates to split the current coding unit 400 or 450 into three coding units, the image decoding device 100 may split the current coding unit 400 or 450 into three coding units 430a, 430b, and 430c, or 480a, 480b, and 480c.

According to an embodiment, a ratio of the width and height of the current coding unit 400 or 450 may be 4:1 or 1:4. When the ratio of the width and height is 4:1, the block shape information may indicate a horizontal direction because the length of the width is longer than the length of the height. When the ratio of the width and height is 1:4, the block shape information may indicate a vertical direction because the length of the width is shorter than the length of the height. The image decoding device 100 may determine to split a current coding unit into the odd number of blocks, based on the split shape mode information. Also, the image decoding device 100 may determine a split direction of the current coding unit 400 or 450, based on the block shape information on the current coding unit 400 or 450. For example, when the current coding unit 400 is in the vertical direction, the image decoding device 100 may determine the coding units 430a to 430c by splitting the current coding unit 400 in the horizontal direction. Also, when the current coding unit 450 is in the horizontal direction, the image decoding device 100 may determine the coding units 480a to 480c by splitting the current coding unit 450 in the vertical direction.

According to an embodiment, the image decoding device 100 may determine the odd number of coding units included in the current coding unit 400 or 450, and not all the determined coding units may have the same size. For example, a preset coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding device 100 may determine the odd number of coding units included in the current coding unit 400 or 450, and moreover, may put a preset restriction on at least one coding unit from among the odd number of coding units generated by splitting the current coding unit 400 or 450. Referring to FIG. 4, the image decoding device 100 may set a decoding process regarding the coding unit 430b or 480b located at the center among the three coding units 430a, 430b, and 430c, or 480a, 480b, and 480c generated as the current coding unit 400 or 450 is split to be different from that of the other coding units 430a and 430c, or 480a and 480c. For example, the image decoding device 100 may restrict the coding unit 430b or 480b at the center location to be no longer split or to be split only a preset number of times, unlike the other coding units 430a and 430c, or 480a and 480c.

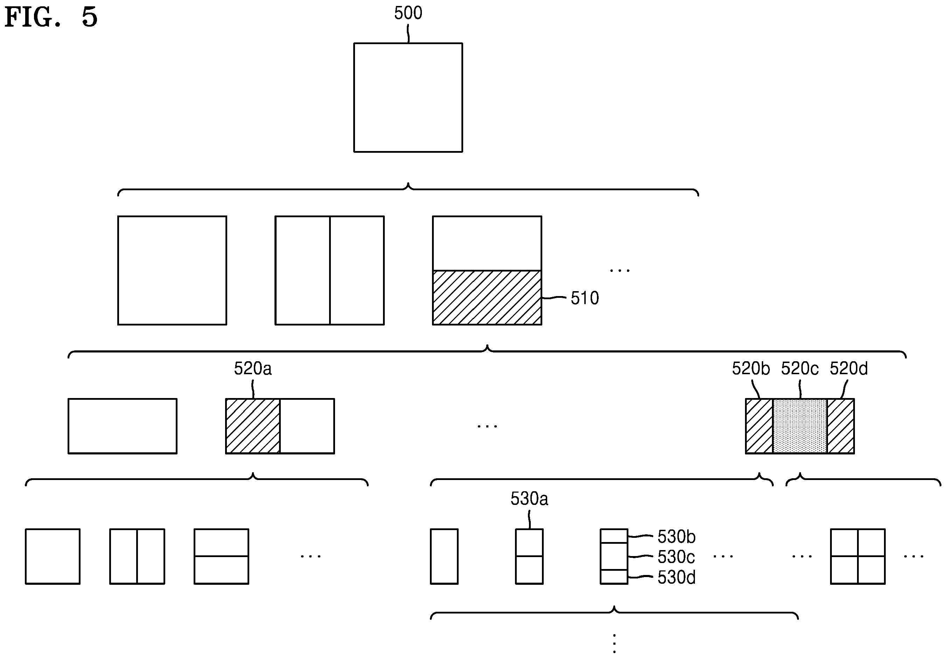

FIG. 5 illustrates a process, performed by an image decoding device, of splitting a coding unit based on at least one of block shape information and split shape mode information, according to an embodiment.

According to an embodiment, the image decoding device 100 may determine to split or not to split a square first coding unit 500 into coding units, based on at least one of the block shape information and the split shape mode information. According to an embodiment, when the split shape mode information indicates to split the first coding unit 500 in a horizontal direction, the image decoding device 100 may determine a second coding unit 510 by splitting the first coding unit 500 in a horizontal direction. A first coding unit, a second coding unit, and a third coding unit used according to an embodiment are terms used to understand a relation before and after splitting a coding unit. For example, a second coding unit may be determined by splitting a first coding unit, and a third coding unit may be determined by splitting the second coding unit. It will be understood that the relation of the first coding unit, the second coding unit, and the third coding unit follows the above descriptions.

According to an embodiment, the image decoding device 100 may determine to split or not to split the determined second coding unit 510 into coding units, based on the split shape mode information. Referring to FIG. 5, the image decoding device 100 may split the non-square second coding unit 510, which is determined by splitting the first coding unit 500, into one or more third coding units 520a, 520b, 520c, and 520d based on at least one of the split shape mode information and the split shape mode information, or may not split the non-square second coding unit 510. The image decoding device 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information on the first coding unit 500, the second coding unit 510 may also be split into the third coding units (e.g., 520a, or 520b, 520c, and 520d) based on the split shape mode information on the second coding unit 510. That is, a coding unit may be recursively split based on the split shape mode information on each coding unit. Therefore, a square coding unit may be determined by splitting a non-square coding unit, and a non-square coding unit may be determined by recursively splitting the square coding unit.

Referring to FIG. 5, a preset coding unit (e.g., a coding unit located at a center location, or a square coding unit) from among an odd number of third coding units 520b, 520c, and 520d determined by splitting the non-square second coding unit 510 may be recursively split. According to an embodiment, the square third coding unit 520c from among the odd number of third coding units 520b, 520c, and 520d may be split in a horizontal direction into a plurality of fourth coding units. A non-square fourth coding unit 530b or 530d from among the plurality of fourth coding units 530a, 530b, 530c, and 530d may be re-split into a plurality of coding units. For example, the non-square fourth coding unit 530b or 530d may be re-split into an odd number of coding units. A method that may be used to recursively split a coding unit will be described below in relation to various embodiments.

According to an embodiment, the image decoding device 100 may split each of the third coding units 520a, or 520b, 520c, and 520d into coding units, based on the split shape mode information. Also, the image decoding device 100 may determine not to split the second coding unit 510 based on the split shape mode information. According to an embodiment, the image decoding device 100 may split the non-square second coding unit 510 into the odd number of third coding units 520b, 520c, and 520d. The image decoding device 100 may put a preset restriction on a preset third coding unit from among the odd number of third coding units 520b, 520c, and 520d. For example, the image decoding device 100 may restrict the third coding unit 520c at a center location from among the odd number of third coding units 520b, 520c, and 520d to be no longer split or to be split a settable number of times.

Referring to FIG. 5, the image decoding device 100 may restrict the third coding unit 520c, which is at the center location from among the odd number of third coding units 520b, 520c, and 520d included in the non-square second coding unit 510, to be no longer split, to be split by using a preset splitting method (e.g., split into only four coding units or split by using a splitting method of the second coding unit 510), or to be split only a preset number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding device 100 may obtain the split shape mode information, which is used to split a current coding unit, from a preset location in the current coding unit.

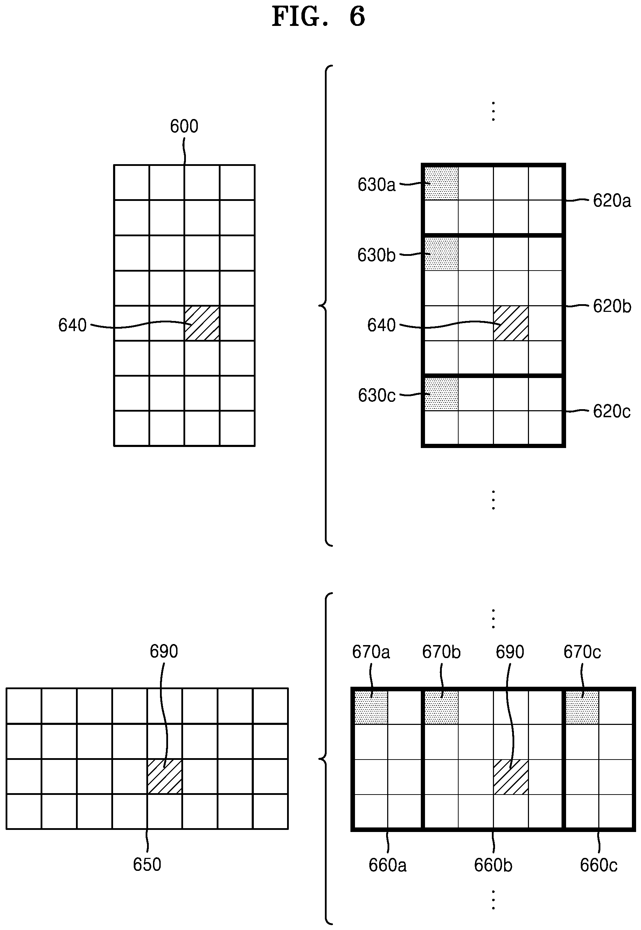

FIG. 6 illustrates a method, performed by an image decoding device, of determining a preset coding unit from among an odd number of coding units, according to an embodiment.

Referring to FIG. 6, split shape mode information on a current coding unit 600 or 650 may be obtained from a sample of a preset location (e.g., a sample 640 or 690 of a center location) from among a plurality of samples included in the current coding unit 600 or 650. However, the preset location in the current coding unit 600, from which at least one piece of the split shape mode information may be obtained, is not limited to the center location in FIG. 6, and may include various locations included in the current coding unit 600 (e.g., top, bottom, left,-right, upper-left, lower-left, upper-right, lower-right locations, or the like). The image decoding device 100 may obtain the split shape mode information from the preset location and may determine to split or not to split the current coding unit into various-shaped and various-sized coding units.

According to an embodiment, when the current coding unit is split into a preset number of coding units, the image decoding device 100 may select one of the coding units. Various methods may be used to select one of a plurality of coding units, as will be described below in relation to various embodiments.

According to an embodiment, the image decoding device 100 may split the current coding unit into a plurality of coding units, and may determine a coding unit at a preset location.

According to an embodiment, image decoding device 100 may use information indicating locations of the odd number of coding units, to determine a coding unit at a center location from among the odd number of coding units. Referring to FIG. 6, the image decoding device 100 may determine the odd number of coding units 620a, 620b, and 620c or the odd number of coding units 660a, 660b, and 660c by splitting the current coding unit 600 or the current coding unit 650. The image decoding device 100 may determine the middle coding unit 620b or the middle coding unit 660b by using information about the locations of the odd number of coding units 620a, 620b, and 620c or the odd number of coding units 660a, 660b, and 660c. For example, the image decoding device 100 may determine the coding unit 620b of the center location by determining the locations of the coding units 620a, 620b, and 620c based on information indicating locations of preset samples included in the coding units 620a, 620b, and 620c. In detail, the image decoding device 100 may determine the coding unit 620b at the center location by determining the locations of the coding units 620a, 620b, and 620c based on information indicating locations of upper-left samples 630a, 630b, and 630c of the coding units 620a, 620b, and 620c.

According to an embodiment, the information indicating the locations of the upper-left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the upper-left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding device 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper-left sample 630a of the upper coding unit 620a may include coordinates (xa, ya), information indicating the location of the upper-left sample 630b of the middle coding unit 620b may include coordinates (xb, yb), and information indicating the location of the upper-left sample 630c of the lower coding unit 620c may include coordinates (xc, yc). The image decoding device 100 may determine the middle coding unit 620b by using the coordinates of the upper-left samples 630a, 630b, and 630c which are included in the coding units 620a, 620b, and 620c, respectively. For example, when the coordinates of the upper-left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper-left samples 630a, 630b, and 630c may include coordinates indicating absolute locations in the picture, or may use coordinates (dxb, dyb) indicating a relative location of the upper-left sample 630b of the middle coding unit 620b and coordinates (dxc, dyc) indicating a relative location of the upper-left sample 630c of the lower coding unit 620c with reference to the location of the upper-left sample 630a of the upper coding unit 620a. A method of determining a coding unit at a preset location by using coordinates of a sample included in the coding unit, as information indicating a location of the sample, is not limited to the above-described method, and may include various arithmetic methods capable of using the coordinates of the sample.

According to an embodiment, the image decoding device 100 may split the current coding unit 600 into a plurality of coding units 620a, 620b, and 620c, and may select one of the coding units 620a, 620b, and 620c based on a preset criterion. For example, the image decoding device 100 may select the coding unit 620b, which has a size different from that of the others, from among the coding units 620a, 620b, and 620c.

According to an embodiment, the image decoding device 100 may determine the width or height of each of the coding units 620a, 620b, and 620c by using the coordinates (xa, ya) that is the information indicating the location of the upper-left sample 630a of the upper coding unit 620a, the coordinates (xb, yb) that is the information indicating the location of the upper-left sample 630b of the middle coding unit 620b, and the coordinates (xc, yc) that is the information indicating the location of the upper-left sample 630c of the lower coding unit 620c. The image decoding device 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding device 100 may determine the width of the upper coding unit 620a to be the width of the current coding unit 600. The image decoding device 100 may determine the height of the upper coding unit 620a to be yb-ya. According to an embodiment, the image decoding device 100 may determine the width of the middle coding unit 620b to be the width of the current coding unit 600. The image decoding device 100 may determine the height of the middle coding unit 620b to be yc-yb. According to an embodiment, the image decoding device 100 may determine the width or height of the lower coding unit 620c by using the width or height of the current coding unit 600 or the widths or heights of the upper and middle coding units 620a and 620b. The image decoding device 100 may determine a coding unit, which has a size different from that of the others, based on the determined widths and heights of the coding units 620a to 620c. Referring to FIG. 6, the image decoding device 100 may determine the middle coding unit 620b, which has a size different from the size of the upper and lower coding units 620a and 620c, as the coding unit of the preset location. However, the above-described method, performed by the image decoding device 100, of determining a coding unit having a size different from the size of the other coding units merely corresponds to an example of determining a coding unit at a preset location by using the sizes of coding units, which are determined based on coordinates of samples, and thus various methods of determining a coding unit at a preset location by comparing the sizes of coding units, which are determined based on coordinates of preset samples, may be used.

The image decoding device 100 may determine the width or height of each of the coding units 660a, 660b, and 660c by using the coordinates (xd, yd) that is information indicating the location of an upper-left sample 670a of the left coding unit 660a, the coordinates (xe, ye) that is information indicating the location of an upper-left sample 670b of the middle coding unit 660b, and the coordinates (xf, yf) that is information indicating a location of the upper-left sample 670c of the right coding unit 660c. The image decoding device 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding device 100 may determine the width of the left coding unit 660a to be xe-xd. The image decoding device 100 may determine the height of the left coding unit 660a to be the height of the current coding unit 650. According to an embodiment, the image decoding device 100 may determine the width of the middle coding unit 660b to be xf-xe. The image decoding device 100 may determine the height of the middle coding unit 660b to be the height of the current coding unit 650. According to an embodiment, the image decoding device 100 may determine the width or height of the right coding unit 660c by using the width or height of the current coding unit 650 or the widths or heights of the left and middle coding units 660a and 660b. The image decoding device 100 may determine a coding unit, which has a size different from that of the others, based on the determined widths and heights of the coding units 660a to 660c. Referring to FIG. 6, the image decoding device 100 may determine the middle coding unit 660b, which has a size different from the sizes of the left and right coding units 660a and 660c, as the coding unit of the preset location. However, the above-described method, performed by the image decoding device 100, of determining a coding unit having a size different from the size of the other coding units merely corresponds to an example of determining a coding unit at a preset location by using the sizes of coding units, which are determined based on coordinates of samples, and thus various methods of determining a coding unit at a preset location by comparing the sizes of coding units, which are determined based on coordinates of preset samples, may be used.

However, locations of samples considered to determine locations of coding units are not limited to the above-described upper-left locations, and information about arbitrary locations of samples included in the coding units may be used.

According to an embodiment, the image decoding device 100 may select a coding unit at a preset location from among an odd number of coding units determined by splitting the current coding unit, considering the shape of the current coding unit. For example, when the current coding unit has a non-square shape, a width of which is longer than a height, the image decoding device 100 may determine the coding unit at the preset location in a horizontal direction. That is, the image decoding device 100 may determine one of coding units at different locations in a horizontal direction and put a restriction on the coding unit. When the current coding unit has a non-square shape, a height of which is longer than a width, the image decoding device 100 may determine the coding unit at the preset location in a vertical direction. That is, the image decoding device 100 may determine one of coding units at different locations in a vertical direction and may put a restriction on the coding unit.

According to an embodiment, the image decoding device 100 may use information indicating respective locations of an even number of coding units, to determine the coding unit at the preset location from among the even number of coding units. The image decoding device 100 may determine an even number of coding units by splitting (binary splitting) the current coding unit, and may determine the coding unit at the preset location by using the information about the locations of the even number of coding units. An operation related thereto may correspond to the operation of determining a coding unit at a preset location (e.g., a center location) from among an odd number of coding units, which has been described in detail above in relation to FIG. 6, and thus detailed descriptions thereof are not provided here.

According to an embodiment, when a non-square current coding unit is split into a plurality of coding units, preset information about a coding unit at a preset location may be used in a splitting operation to determine the coding unit at the preset location from among the plurality of coding units. For example, the image decoding device 100 may use at least one of block shape information and split shape mode information, which is stored in a sample included in a middle coding unit, in a splitting operation to determine a coding unit at a center location from among the plurality of coding units determined by splitting the current coding unit.

Referring to FIG. 6, the image decoding device 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding device 100 may determine the coding unit 620b at the center location, in consideration of a location from which the split shape mode information is obtained. That is, the split shape mode information on the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, preset information for identifying the coding unit at the preset location may be obtained from a preset sample included in a coding unit to be determined. Referring to FIG. 6, the image decoding device 100 may use the split shape mode information, which is obtained from a sample at a preset location in the current coding unit 600 (e.g., a sample at a center location of the current coding unit 600) to determine a coding unit at a preset location from among the plurality of the coding units 620a, 620b, and 620c determined by splitting the current coding unit 600 (e.g., a coding unit at a center location from among a plurality of split coding units). That is, the image decoding device 100 may determine the sample at the preset location by considering a block shape of the current coding unit 600, determine the coding unit 620b including a sample, from which preset information (e.g., the split shape mode information) may be obtained, from among the plurality of coding units 620a, 620b, and 620c determined by splitting the current coding unit 600, and may put a preset restriction on the coding unit 620b. Referring to FIG. 6, according to an embodiment, the image decoding device 100 may determine the sample 640 at the center location of the current coding unit 600 as the sample from which the preset information may be obtained, and may put a preset restriction on the coding unit 620b including the sample 640, in a decoding operation. However, the location of the sample from which the preset information may be obtained is not limited to the above-described location, and may include arbitrary locations of samples included in the coding unit 620b to be determined for a restriction.

According to an embodiment, the location of the sample from which the preset information may be obtained may be determined based on the shape of the current coding unit 600. According to an embodiment, the block shape information may indicate whether the current coding unit has a square or non-square shape, and the location of the sample from which the preset information may be obtained may be determined based on the shape. For example, the image decoding device 100 may determine a sample located on a boundary for splitting at least one of a width and height of the current coding unit in half, as the sample from which the preset information may be obtained, by using at least one of information about the width of the current coding unit and information about the height of the current coding unit. As another example, when the block shape information on the current coding unit indicates a non-square shape, the image decoding device 100 may determine one of samples adjacent to a boundary for splitting a long side of the current coding unit in half, as the sample from which the preset information may be obtained.

According to an embodiment, when the current coding unit is split into a plurality of coding units, the image decoding device 100 may use the split shape mode information to determine a coding unit at a preset location from among the plurality of coding units. According to an embodiment, the image decoding device 100 may obtain the split shape mode information from a sample at a preset location in a coding unit, and split the plurality of coding units, which are generated by splitting the current coding unit, by using the split shape mode information, which is obtained from the sample of the preset location in each of the plurality of coding units. That is, a coding unit may be recursively split based on the split shape mode information, which is obtained from the sample at the preset location in each coding unit. An operation of recursively splitting a coding unit has been described above in relation to FIG. 5, and thus detailed descriptions thereof will not be provided here.

According to an embodiment, the image decoding device 100 may determine one or more coding units by splitting the current coding unit, and may determine an order of decoding the one or more coding units, based on a preset block (e.g., the current coding unit).

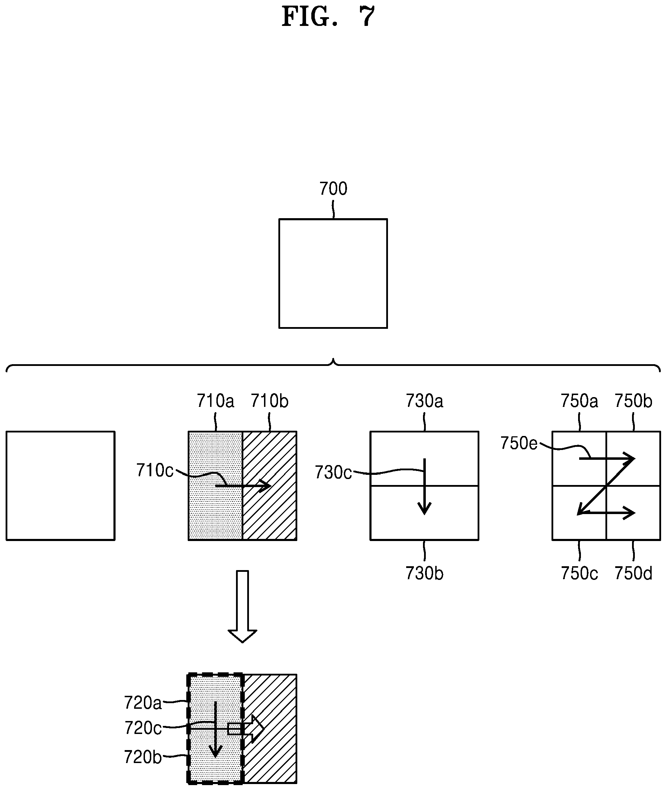

FIG. 7 illustrates an order of processing a plurality of coding units when an image decoding device determines the plurality of coding units by splitting a current coding unit, according to an embodiment.

According to an embodiment, the image decoding device 100 may determine second coding units 710a and 710b by splitting a first coding unit 700 in a vertical direction, determine second coding units 730a and 730b by splitting the first coding unit 700 in a horizontal direction, or determine second coding units 750a, 750b, 750c, and 750d by splitting the first coding unit 700 in vertical and horizontal directions, based on split shape mode information.

Referring to FIG. 7, the image decoding device 100 may determine to process the second coding units 710a and 710b, which are determined by splitting the first coding unit 700 in a vertical direction, in a horizontal direction order 710c. The image decoding device 100 may determine to process the second coding units 730a and 730b, which are determined by splitting the first coding unit 700 in a horizontal direction, in a vertical direction order 730c. The image decoding device 100 may determine the second coding units 750a, 750b, 750c, and 750d, which are determined by splitting the first coding unit 700 in vertical and horizontal directions, according to a preset order (e.g., a raster scan order or Z-scan order 750e) by which coding units in a row are processed and then coding units in a next row are processed.

According to an embodiment, the image decoding device 100 may recursively split coding units. Referring to FIG. 7, the image decoding device 100 may determine the plurality of coding units 710a and 710b, 730a and 730b, or 750a, 750b, 750c, and 750d by splitting the first coding unit 700, and recursively split each of the determined plurality of coding units 710a, 710b, 730a, 730b, 750a, 750b, 750c, and 750d. A splitting method of the plurality of coding units 710a and 710b, 730a and 730b, or 750a, 750b, 750c, and 750d may correspond to a splitting method of the first coding unit 700. As such, each of the plurality of coding units 710a and 710b, 730a and 730b, or 750a, 750b, 750c, and 750d may be independently split into a plurality of coding units. Referring to FIG. 7, the image decoding device 100 may determine the second coding units 710a and 710b by splitting the first coding unit 700 in a vertical direction, and may determine to independently split or not to split each of the second coding units 710a and 710b.

According to an embodiment, the image decoding device 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding device 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and various methods may be used to independently process coding units, which are split and determined to various shapes, in a preset order.

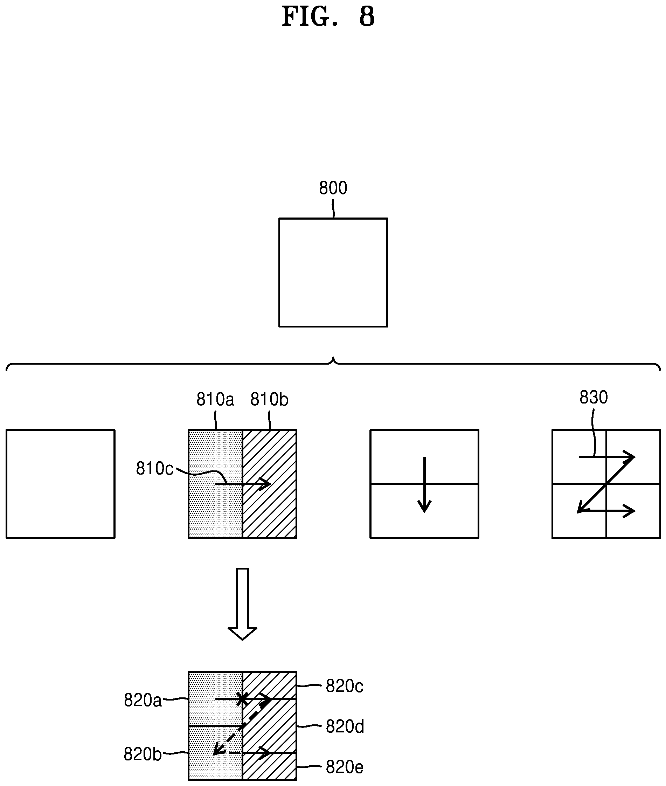

FIG. 8 illustrates a process, performed by an image decoding device, of determining that a current coding unit is to be split into an odd number of coding units, when the coding units are not processable in a preset order, according to an embodiment.

According to an embodiment, the image decoding device 100 may determine that the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c to 820e. According to an embodiment, the image decoding device 100 may determine the plurality of third coding units 820a and 820b by splitting the left second coding unit 810a in a horizontal direction, and may split the right second coding unit 810b into the odd number of third coding units 820c to 820e.

According to an embodiment, the video decoding device 100 may determine whether any coding unit is split into an odd number of coding units, by determining whether the third coding units 820a and 820b, and 820c to 820e are processable in a preset order. Referring to FIG. 8, the image decoding device 100 may determine the third coding units 820a and 820b, and 820c to 820e by recursively splitting the first coding unit 800. The image decoding device 100 may determine whether any of the first coding unit 800, the second coding units 810a and 810b, or the third coding units 820a and 820b, and 820c to 820e are split into an odd number of coding units, based on at least one of the block shape information and the split shape mode information. For example, a coding unit located in the right from among the second coding units 810a and 810b may be split into an odd number of third coding units 820c, 820d, and 820e. A processing order of a plurality of coding units included in the first coding unit 800 may be a preset order (e.g., a Z-scan order 830), and the image decoding device 100 may determine whether the third coding units 820c, 820d, and 820e, which are determined by splitting the right second coding unit 810b into an odd number of coding units, satisfy a condition for processing in the preset order.

According to an embodiment, the image decoding device 100 may determine whether the third coding units 820a and 820b, and 820c to 820e included in the first coding unit 800 satisfy the condition for processing in the preset order, and the condition relates to whether at least one of a width and height of the second coding units 810a and 810b is to be split in half along a boundary of the third coding units 820a and 820b, and 820c to 820e. For example, the third coding units 820a and 820b determined when the height of the left second coding unit 810a of the non-square shape is split in half may satisfy the condition. It may be determined that the third coding units 820c to 820e do not satisfy the condition because the boundaries of the third coding units 820c to 820e determined when the right second coding unit 810b is split into three coding units are unable to split the width or height of the right second coding unit 810b in half. When the condition is not satisfied as described above, the image decoding device 100 may determine disconnection of a scan order, and may determine that the right second coding unit 810b is to be split into an odd number of coding units, based on a result of the determination. According to an embodiment, when a coding unit is split into an odd number of coding units, the image decoding device 100 may put a preset restriction on a coding unit at a preset location from among the split coding units. The restriction or the preset location has been described above in relation to various embodiments, and thus detailed descriptions thereof will not be provided herein.

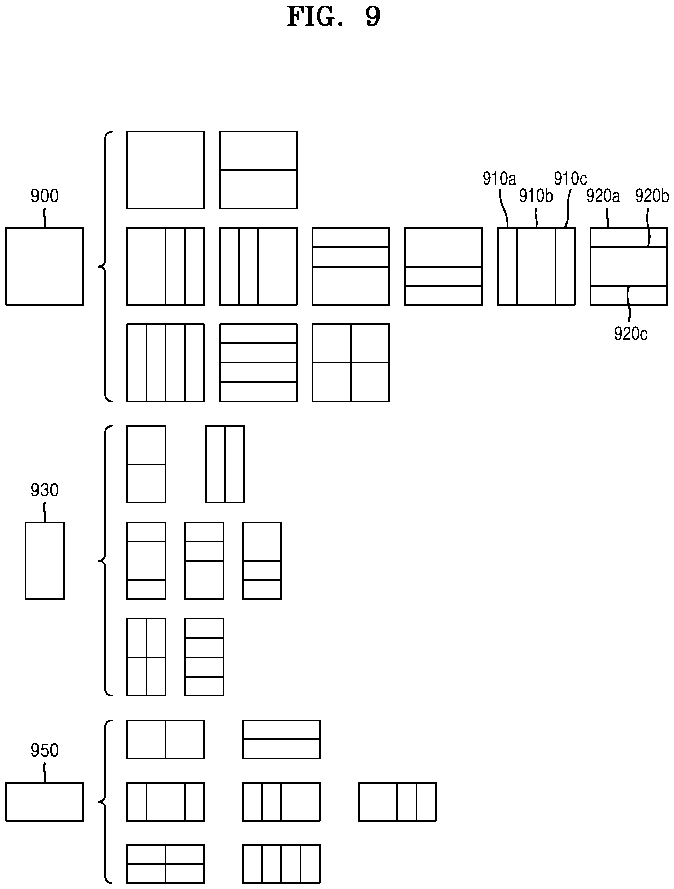

FIG. 9 illustrates a process, performed by an image decoding device, of determining at least one coding unit by splitting a first coding unit, according to an embodiment.

According to an embodiment, the image decoding device 100 may split the first coding unit 900, based on split shape mode information, which is obtained through the receiver 110. The square first coding unit 900 may be split into four square coding units, or may be split into a plurality of non-square coding units. For example, referring to FIG. 9, when the first coding unit 900 has a square shape and the split shape mode information indicates to split the first coding unit 900 into non-square coding units, the image decoding device 100 may split the first coding unit 900 into a plurality of non-square coding units. In detail, when the split shape mode information indicates to determine an odd number of coding units by splitting the first coding unit 900 in a horizontal direction or a vertical direction, the image decoding device 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding device 100 may determine whether the second coding units 910a, 910b, 910c, 920a, 920b, and 920c included in the first coding unit 900 satisfy a condition for processing in a preset order, and the condition relates to whether at least one of a width and height of the first coding unit 900 is to be split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the height of the first coding unit 900 in half, it may be determined that the first coding unit 900 does not satisfy the condition for processing in the preset order. Also, because boundaries of the second coding units 920a, 920b, and 920c determined by splitting the square first coding unit 900 in a horizontal direction do not split the width of the first coding unit 900 in half, it may be determined that the first coding unit 900 does not satisfy the condition for processing in the preset order. When the condition is not satisfied as described above, the image decoding device 100 may decide disconnection of a scan order, and may determine that the first coding unit 900 is to be split into an odd number of coding units, based on a result of the decision. According to an embodiment, when a coding unit is split into an odd number of coding units, the image decoding device 100 may put a preset restriction on a coding unit at a preset location from among the split coding units. The restriction or the preset location has been described above in relation to various embodiments, and thus detailed descriptions thereof will not be provided herein.

According to an embodiment, the image decoding device 100 may determine various-shaped coding units by splitting a first coding unit.

Referring to FIG. 9, the image decoding device 100 may split the square first coding unit 900 or a non-square first coding unit 930 or 950 into various-shaped coding units.

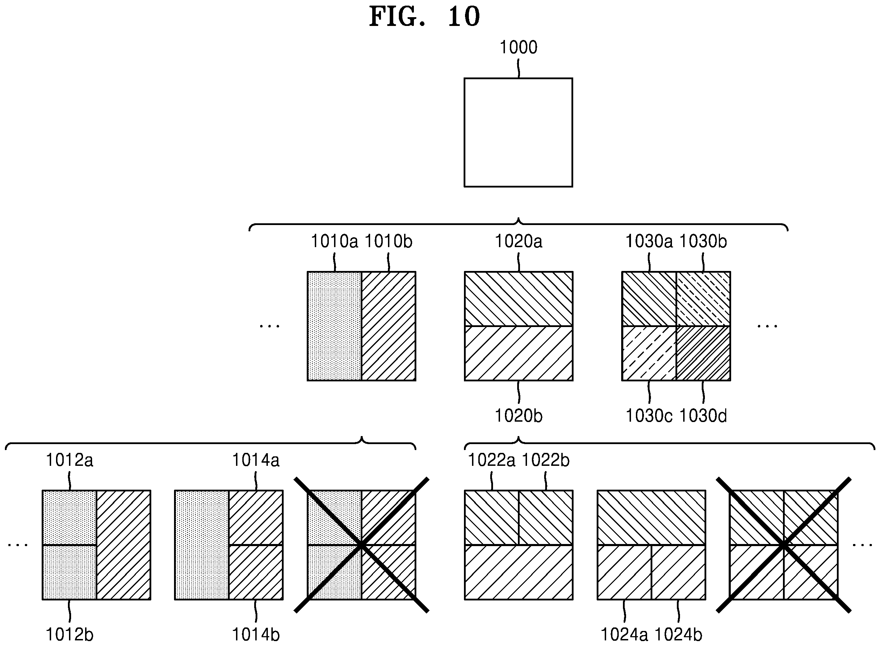

FIG. 10 illustrates that a shape into which a second coding unit is splittable is restricted when the second coding unit having a non-square shape, which is determined when an image decoding device splits a first coding unit, satisfies a preset condition, according to an embodiment.

According to an embodiment, the image decoding device 100 may determine to split the square first coding unit 1000 into non-square second coding units 1010a, and1010b or 1020a and 1020b, based on split shape mode information, which is obtained by the receiver 110. The second coding units 1010a and 1010b, or 1020a and 1020b may be independently split. As such, the image decoding device 100 may determine to split or not to split each of the second coding units 1010a and 1010b, or 1020a and 1020b into a plurality of coding units, based on the split shape mode information on each of the second coding units 1010a and 1010b, or 1020a and 1020b. According to an embodiment, the image decoding device 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding device 100 may restrict the right second coding unit 1010b to not be split in a horizontal direction in which the left second coding unit 1010a is split. When third coding units 1014a and 1014b are determined by splitting the right second coding unit 1010b in the same direction, because the left and right second coding units 1010a and 1010b are independently split in a horizontal direction, the third coding units 1012a and 1012b, or 1014a and 1014b may be determined. However, this case serves equally as a case in which the image decoding device 100 splits the first coding unit 1000 into four square second coding units 1030a, 1030b, 1030c, and 1030d, based on the split shape mode information, and may be inefficient in terms of image decoding.

According to an embodiment, the image decoding device 100 may determine third coding units 1022a and 1022b, or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding device 100 may restrict the other second coding unit (e.g., the lower second coding unit 1020b) to not be split in a vertical direction in which the upper second coding unit 1020a is split.

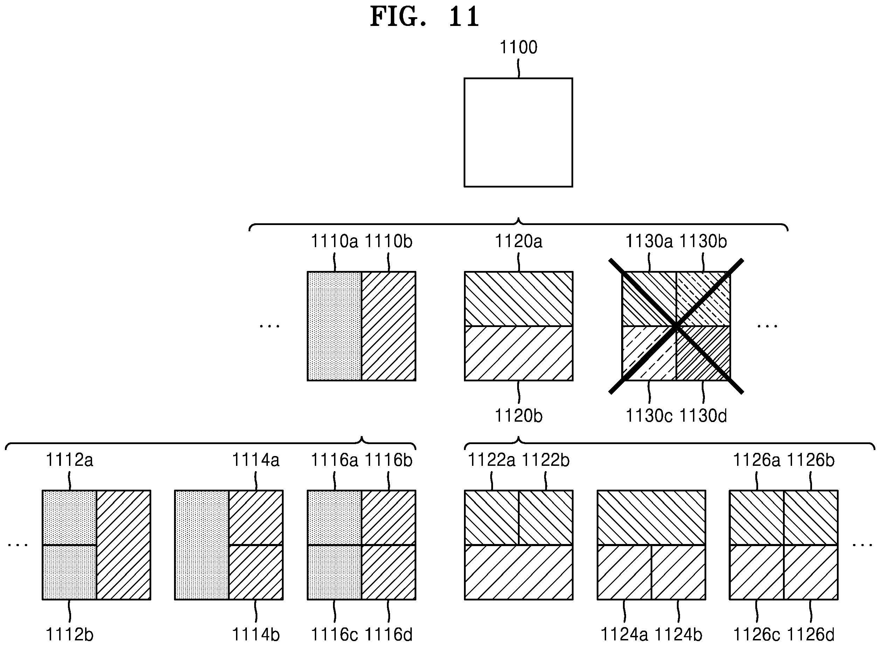

FIG. 11 illustrates a process, performed by an image decoding device, of splitting a square coding unit when split shape mode information indicates that the square coding unit is not to be split into four square coding units, according to an embodiment.

According to an embodiment, the image decoding device 100 may determine second coding units 1110a and 1110b, or 1120a and 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding device 100 may not split the square first coding unit 1100 into four square second coding units 1130a, 1130b, 1130c, and 1130d. The image decoding device 100 may determine the non-square second coding units 1110a and 1110b, or 1120a and 1120b, etc., based on the split shape mode information.

According to an embodiment, the image decoding device 100 may independently split the non-square second coding units 1110a and 1110b, or 1120a and 1120b, etc. Each of the second coding units 1110a and 1110b, or 1120a and 1120b, etc. may be recursively split in a preset order, and this splitting method may correspond to a method of splitting the first coding unit 1100, based on the split shape mode information.

For example, the image decoding device 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding device 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding device 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding device 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

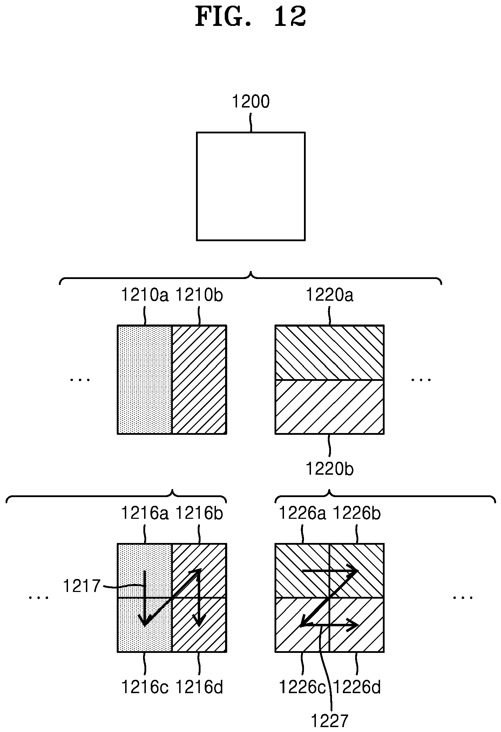

FIG. 12 illustrates that a processing order between a plurality of coding units may be changed depending on a process of splitting a coding unit, according to an embodiment.

According to an embodiment, the image decoding device 100 may split a first coding unit 1200, based on split shape mode information. When a block shape indicates a square shape and the split shape mode information indicates to split the first coding unit 1200 in at least one of horizontal and vertical directions, the image decoding device 100 may determine second coding units 1210a and 1210b, or 1220a and 1220b, etc. by splitting the first coding unit 1200. Referring to FIG. 12, the non-square second coding units 1210a and 1210b, or 1220a and 1220b determined by splitting the first coding unit 1200 in only a horizontal direction or vertical direction may be independently split based on the split shape mode information on each coding unit. For example, the image decoding device 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a and 1210b, or 1220a and 1220b has been described above in relation to FIG. 11, and thus detailed descriptions thereof will not be provided herein.

According to an embodiment, the image decoding device 100 may process coding units in a preset order. An operation of processing coding units in a preset order has been described above in relation to FIG. 7, and thus detailed descriptions thereof will not be provided herein. Referring to FIG. 12, the image decoding device 100 may determine four square third coding units 1216a, 1216b, 1216c, and 1216d, and 1226a, 1226b, 1226c, and 1226d by splitting the square first coding unit 1200. According to an embodiment, the image decoding device 100 may determine processing orders of the third coding units 1216a, 1216b, 1216c, and 1216d, and 1226a, 1226b, 1226c, and 1226d based on a split shape by which the first coding unit 1200 is split.

According to an embodiment, the image decoding device 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding device 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape mode information, the image decoding device 100 may process a plurality of coding units in different orders even when the coding units are eventually determined to be the same shape.

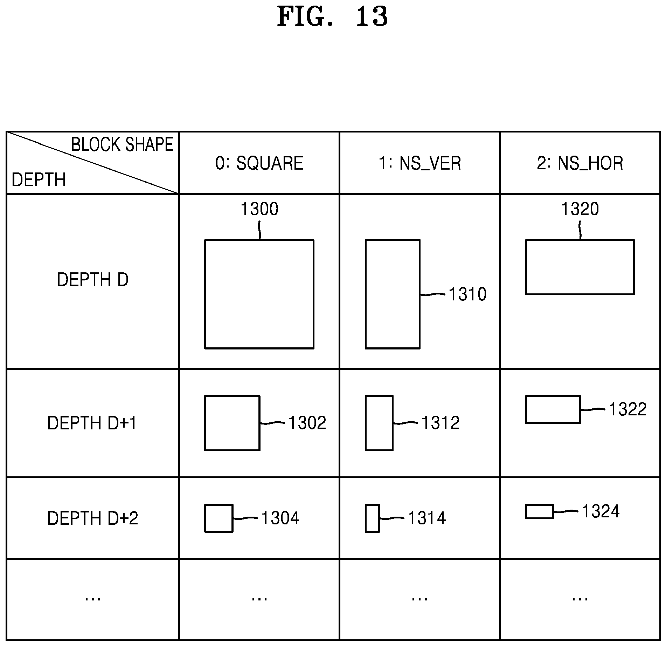

FIG. 13 illustrates a process of determining a depth of a coding unit as a shape and size of the coding unit change, when the coding unit is recursively split such that a plurality of coding units are determined, according to an embodiment.

According to an embodiment, the image decoding device 100 may determine the depth of the coding unit, based on a preset criterion. For example, the preset criterion may be the length of a long side of the coding unit. When the length of a long side of a coding unit before being split is 2n times (n>0) the length of a long side of a split current coding unit, the image decoding device 100 may determine that a depth of the current coding unit is increased from a depth of the coding unit before being split, by n. In the following description, a coding unit having an increased depth is expressed as a coding unit of a deeper depth.

Referring to FIG. 13, according to an embodiment, the image decoding device 100 may determine a second coding unit 1302 and a third coding unit 1304 of deeper depths by splitting a square first coding unit 1300 based on block shape information indicating a square shape (e.g., the block shape information may be expressed as '0: SQUARE'). Assuming that the size of the square first coding unit 1300 is 2Nx2N, the second coding unit 1302 determined by splitting a width and height of the first coding unit 1300 in 1/2 may have a size of NxN. Furthermore, the third coding unit 1304 determined by splitting a width and height of the second coding unit 1302 in 1/2 may have a size of N/2xN/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding device 100 may determine a second coding unit 1312 or 1322 and a third coding unit 1314 or 1324 of deeper depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding device 100 may determine a second coding unit 1302, 1312, or 1322 by splitting at least one of a width and height of the first coding unit 1310 having a size of Nx2N. That is, the image decoding device 100 may determine the second coding unit 1302 having a size of NxN or the second coding unit 1322 having a size of NxN/2 by splitting the first coding unit 1310 in a horizontal direction, or may determine the second coding unit 1312 having a size of N/2xN by splitting the first coding unit 1310 in horizontal and vertical directions.

According to an embodiment, the image decoding device 100 may determine the second coding unit 1302, 1312, or 1322 by splitting at least one of a width and height of the first coding unit 1320 having a size of 2NxN. That is, the image decoding device 100 may determine the second coding unit 1302 having a size of NxN or the second coding unit 1312 having a size of N/2xN by splitting the first coding unit 1320 in a vertical direction, or may determine the second coding unit 1322 having a size of NxN/2 by splitting the first coding unit 1320 in horizontal and vertical directions.

According to an embodiment, the image decoding device 100 may determine a third coding unit 1304, 1314, or 1324 by splitting at least one of a width and height of the second coding unit 1302 having a size of NxN. That is, the image decoding device 100 may determine the third coding unit 1304 having a size of N/2xN/2, the third coding unit 1314 having a size of N/4xN/2, or the third coding unit 1324 having a size of N/2xN/4 by splitting the second coding unit 1302 in vertical and horizontal directions.

According to an embodiment, the image decoding device 100 may determine the third coding unit 1304, 1314, or 1324 by splitting at least one of a width and height of the second coding unit 1312 having a size of N/2xN. That is, the image decoding device 100 may determine the third coding unit 1304 having a size of N/2xN/2 or the third coding unit 1324 having a size of N/2xN/4 by splitting the second coding unit 1312 in a horizontal direction, or may determine the third coding unit 1314 having a size of N/4xN/2 by splitting the second coding unit 1312 in vertical and horizontal directions.

According to an embodiment, the image decoding device 100 may determine the third coding unit 1304, 1314, or 1324 by splitting at least one of a width and height of the second coding unit 1322 having a size of NxN/2. That is, the image decoding device 100 may determine the third coding unit 1304 having a size of N/2xN/2 or the third coding unit 1314 having a size of N/4xN/2 by splitting the second coding unit 1322 in a vertical direction, or may determine the third coding unit 1324 having a size of N/2xN/4 by splitting the second coding unit 1322 in vertical and horizontal directions.

According to an embodiment, the image decoding device 100 may split the square coding unit 1300, 1302, or 1304 in a horizontal or vertical direction. For example, the image decoding device 100 may determine the first coding unit 1310 having a size of Nx2N by splitting the first coding unit 1300 having a size of 2Nx2N in a vertical direction, or may determine the first coding unit 1320 having a size of 2NxN by splitting the first coding unit 1300 in a horizontal direction. According to an embodiment, when a depth is determined based on the length of the longest side of a coding unit, a depth of a coding unit determined by splitting the first coding unit 1300 having a size of 2Nx2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

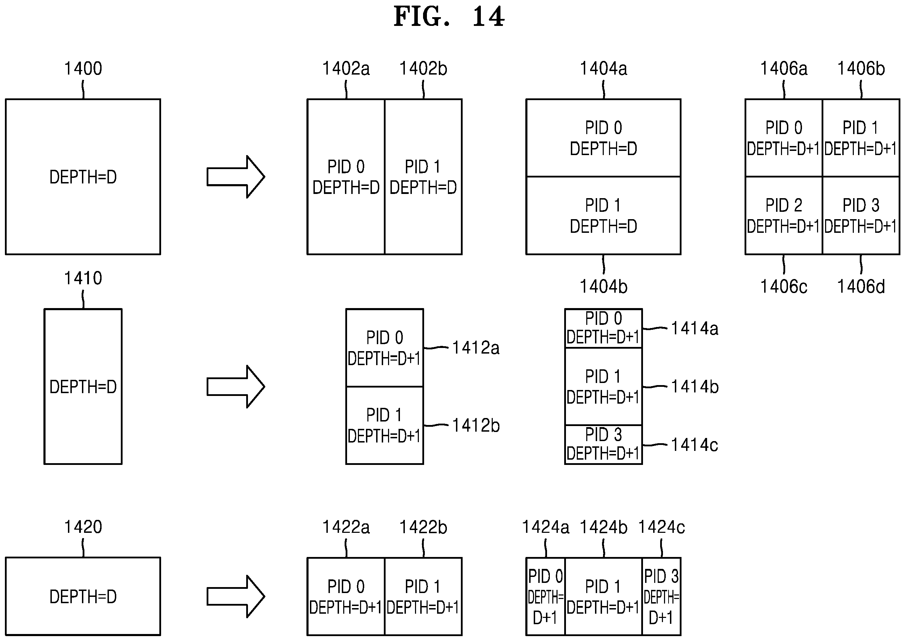

FIG. 14 illustrates depths that are determinable based on shapes and sizes of coding units, and part indexes (PIDs) that are for distinguishing the coding units, according to an embodiment.

According to an embodiment, the image decoding device 100 may determine various-shape second coding units by splitting a square first coding unit 1400. Referring to FIG. 14, the image decoding device 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding device 100 may determine the second coding units 1402a and 1402b, 1404a and 1404b, and 1406a, 1406b, 1406c, and 1406d, based on the split shape mode information on the first coding unit 1400.

According to an embodiment, depths of the second coding units 1402a and 1402b, 1404a and 1404b, and 1406a, 1406b, 1406c, and 1406d that are determined based on the split shape mode information on the square first coding unit 1400 may be determined based on the length of a long side thereof. For example, because the length of a side of the square first coding unit 1400 equals the length of a long side of the non-square second coding units 1402a and 1402b, and 1404a and 1404b, the first coding unit 1400 and the non-square second coding units 1402a and 1402b, and 1404a and 1404b may have the same depth, e.g., D. However, when the image decoding device 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the image decoding device 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding device 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, a depth of the second coding units 1412a and 1412b, and 1414a, 1414b, and 1414c, or 1422a and 1422b, and 1424a, 1424b, and 1424c, which are determined based on the split shape mode information on the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is deeper than the depth D of the non-square first coding unit 1410 by 1.

Furthermore, the image decoding device 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is deeper than the depth D of the non-square first coding unit 1410 by 1. The image decoding device 100 may determine depths of coding units split from the first coding unit 1420 having a non-square shape, a width of which is longer than a height, by using the above-described method of determining depths of coding units split from the first coding unit 1410.

According to an embodiment, the image decoding device 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus may be 3. That is, discontinuity in PID values may be present. According to an embodiment, the image decoding device 100 may determine whether an odd number of split coding units do not have equal sizes, based on whether discontinuity is present in PIDs for identifying the split coding units.

According to an embodiment, the image decoding device 100 may determine whether to use a specific splitting method, based on PID values for identifying a plurality of coding units determined by splitting a current coding unit. Referring to FIG. 14, the image decoding device 100 may determine an even number of coding units 1412a and 1412b or an odd number of coding units 1414a, 1414b, and 1414c by splitting the first coding unit 1410 having a rectangular shape, a height of which is longer than a width. The image decoding device 100 may use PIDs indicating respective coding units so as to identify the respective coding units. According to an embodiment, the PID may be obtained from a sample at a preset location of each coding unit (e.g., an upper-left sample).

According to an embodiment, the image decoding device 100 may determine a coding unit at a preset location from among the split coding units, by using the PIDs for distinguishing the coding units. According to an embodiment, when the split shape mode information on the first coding unit 1410 having a rectangular shape, a height of which is longer than a width, indicates to split a coding unit into three coding units, the image decoding device 100 may split the first coding unit 1410 into three coding units 1414a, 1414b, and 1414c. The image decoding device 100 may assign a PID to each of the three coding units 1414a, 1414b, and 1414c. The image decoding device 100 may compare PIDs of an odd number of split coding units to determine a coding unit at a center location from among the coding units. The image decoding device 100 may determine the coding unit 1414b having a PID corresponding to a middle value among the PIDs of the coding units, as the coding unit at the center location from among the coding units determined by splitting the first coding unit 1410. According to an embodiment, the image decoding device 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding device 100 may determine that a coding unit is split into a plurality of coding units including a coding unit having a size different from that of the other coding units. According to an embodiment, when the split shape mode information indicates to split a coding unit into an odd number of coding units, the image decoding device 100 may split a current coding unit in such a manner that a coding unit of a preset location among an odd number of coding units (e.g., a coding unit of a center location) has a size different from that of the other coding units. In this case, the image decoding device 100 may determine the coding unit of the center location, which has a different size, by using PIDs of the coding units. However, the PIDs and the size or location of the coding unit of the preset location are not limited to the above-described examples, and various PIDs and various locations and sizes of coding units may be used.

According to an embodiment, the image decoding device 100 may use a preset data unit where a coding unit starts to be recursively split.

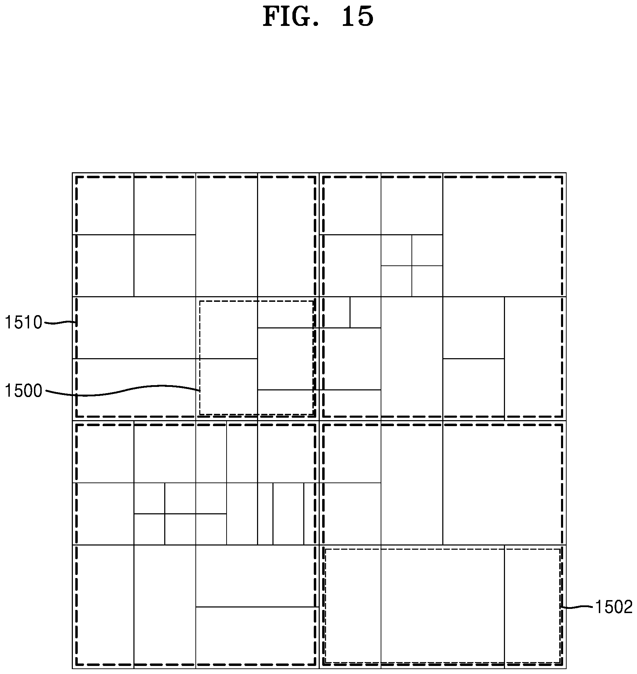

FIG. 15 illustrates that a plurality of coding units are determined based on a plurality of preset data units included in a picture, according to an embodiment.

According to an embodiment, a preset data unit may be defined as a data unit where a coding unit starts to be recursively split by using split shape mode information. That is, the preset data unit may correspond to a coding unit of an uppermost depth, which is used to determine a plurality of coding units split from a current picture. In the following descriptions, for convenience of explanation, the preset data unit is referred to as a reference data unit.

According to an embodiment, the reference data unit may have a preset size and a preset shape. According to an embodiment, a reference coding unit may include MxN samples. Herein, M and N may be equal to each other, and may be integers expressed as powers of 2. That is, the reference data unit may have a square or non-square shape, and may be split into an integer number of coding units.

According to an embodiment, the image decoding device 100 may split the current picture into a plurality of reference data units. According to an embodiment, the image decoding device 100 may split the plurality of reference data units, which are split from the current picture, by using the split shape mode information on each reference data unit. The operation of splitting the reference data unit may correspond to a splitting operation using a quadtree structure.

According to an embodiment, the image decoding device 100 may previously determine the minimum size allowed for the reference data units included in the current picture. Accordingly, the image decoding device 100 may determine various reference data units having sizes equal to or greater than the minimum size, and may determine one or more coding units by using the split shape mode information with reference to the determined reference data unit.

Referring to FIG. 15, the image decoding device 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, or the like).

According to an embodiment, the receiver 110 of the image decoding device 100 may obtain, from a bitstream, at least one of reference coding unit shape information and reference coding unit size information with respect to each of the various data units. An operation of splitting the square reference coding unit 1500 into one or more coding units has been described above in relation to the operation of splitting the current coding unit 300 of FIG. 3, and an operation of splitting the non-square reference coding unit 1502 into one or more coding units has been described above in relation to the operation of splitting the current coding unit 400 or 450 of FIG. 4. Thus, detailed descriptions thereof will not be provided herein.

According to an embodiment, the image decoding device 100 may use a PID for identifying the size and shape of reference coding units, to determine the size and shape of reference coding units according to some data units previously determined based on a preset condition. That is, the receiver 110 may obtain, from the bitstream, only the PID for identifying the size and shape of reference coding units with respect to each slice, slice segment, tile, tile group, or largest coding unit which is a data unit satisfying a preset condition (e.g., a data unit having a size equal to or smaller than a slice) among the various data units (e.g., sequences, pictures, slices, slice segments, tiles, tile groups, largest coding units, or the like). The image decoding device 100 may determine the size and shape of reference data units with respect to each data unit, which satisfies the preset condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding device 100 may determine at least one of the size and shape of reference coding units included in a data unit serving as a unit for obtaining the PID, by selecting the previously determined at least one of the size and shape of reference coding units based on the PID.

According to an embodiment, the image decoding device 100 may use one or more reference coding units included in a largest coding unit. That is, a largest coding unit split from a picture may include one or more reference coding units, and coding units may be determined by recursively splitting each reference coding unit. According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the image decoding device 100 may determine the reference coding units by splitting the largest coding unit n times based on a quadtree structure, and may split the reference coding unit based on at least one of the block shape information and the split shape mode information according to various embodiments.

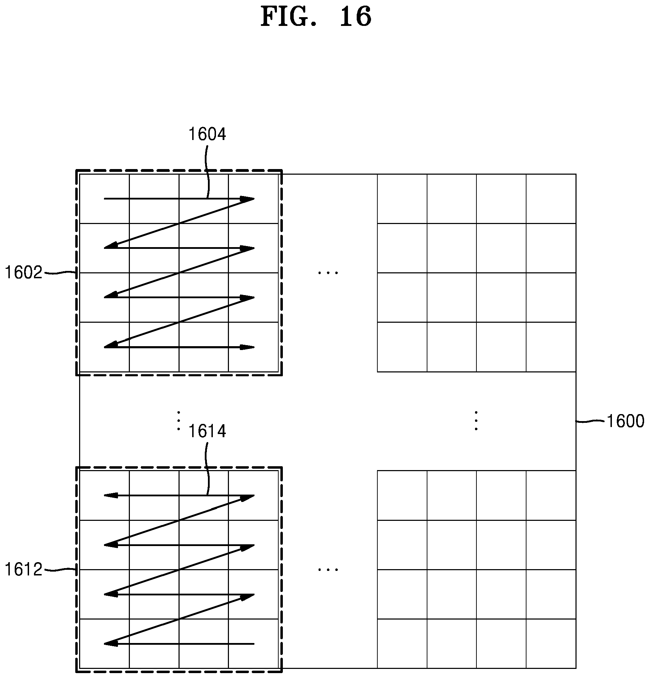

FIG. 16 illustrates a processing block serving as a unit for determining a determination order of reference coding units included in a picture, according to an embodiment.

According to an embodiment, the image decoding device 100 may determine one or more processing blocks split from a picture. The processing block is a data unit including one or more reference coding units split from a picture, and the one or more reference coding units included in the processing block may be determined according to a specific order. That is, a determination order of one or more reference coding units determined in each processing block may correspond to one of various types of orders for determining reference coding units, and may vary depending on the processing block. The determination order of reference coding units, which is determined with respect to each processing block, may be one of various orders, e.g., raster scan order, Z-scan, N-scan, up-right diagonal scan, horizontal scan, and vertical scan, but is not limited to the above-mentioned scan orders.

According to an embodiment, the image decoding device 100 may obtain processing block size information and may determine the size of one or more processing blocks included in the picture. The image decoding device 100 may obtain the processing block size information from a bitstream and may determine the size of one or more processing blocks included in the picture. The size of processing blocks may be a preset size of data units, which is indicated by the processing block size information.

According to an embodiment, the receiver 110 of the image decoding device 100 may obtain the processing block size information from the bitstream according to each specific data unit. For example, the processing block size information may be obtained from the bitstream in a data unit such as an image, sequence, picture, slice, slice segment, tile, or tile group. That is, the receiver 110 may obtain the processing block size information from the bitstream according to each of the various data units, and the image decoding device 100 may determine the size of one or more processing blocks, which are split from the picture, by using the obtained processing block size information. The size of the processing blocks may be integer times that of the reference coding units.

According to an embodiment, the image decoding device 100 may determine the size of processing blocks 1602 and 1612 included in the picture 1600. For example, the image decoding device 100 may determine the size of processing blocks based on the processing block size information obtained from the bitstream. Referring to FIG. 16, according to an embodiment, the image decoding device 100 may determine a width of the processing blocks 1602 and 1612 to be four times the width of the reference coding units, and may determine a height of the processing blocks 1602 and 1612 to be four times the height of the reference coding units. The image decoding device 100 may determine a determination order of one or more reference coding units in one or more processing blocks.

According to an embodiment, the image decoding device 100 may determine the processing blocks 1602 and 1612, which are included in the picture 1600, based on the size of processing blocks, and may determine a determination order of one or more reference coding units in the processing blocks 1602 and 1612. According to an embodiment, determination of reference coding units may include determination of the size of the reference coding units.

According to an embodiment, the image decoding device 100 may obtain, from the bitstream, determination order information on one or more reference coding units included in one or more processing blocks, and may determine a determination order with respect to one or more reference coding units based on the obtained determination order information. The determination order information may be defined as an order or direction for determining the reference coding units in the processing block. That is, the determination order of reference coding units may be independently determined with respect to each processing block.

According to an embodiment, the image decoding device 100 may obtain, from the bitstream, the determination order information on reference coding units according to each specific data unit. For example, the receiver 110 may obtain the determination order information on reference coding units from the bitstream according to each data unit such as an image, sequence, picture, slice, slice segment, tile, tile group, or processing block. Because the determination order information on reference coding units indicates an order for determining reference coding units in a processing block, the determination order information may be obtained with respect to each specific data unit including an integer number of processing blocks.

According to an embodiment, the image decoding device 100 may determine one or more reference coding units based on the determined determination order.

According to an embodiment, the receiver 110 may obtain the determination order information on reference coding units from the bitstream as information related to the processing blocks 1602 and 1612, and the image decoding device 100 may determine a determination order of one or more reference coding units included in the processing blocks 1602 and 1612 and determine one or more reference coding units, which are included in the picture 1600, based on the determination order. Referring to FIG. 16, the image decoding device 100 may determine determination orders 1604 and 1614 of one or more reference coding units in the processing blocks 1602 and 1612, respectively. For example, when the determination order information on reference coding units is obtained with respect to each processing block, different types of the determination order information on reference coding units may be obtained for the processing blocks 1602 and 1612. When the determination order 1604 of reference coding units in the processing block 1602 is a raster scan order, reference coding units included in the processing block 1602 may be determined according to a raster scan order. On the contrary, when the determination order 1614 of reference coding units in the other processing block 1612 is a backward raster scan order, reference coding units included in the processing block 1612 may be determined according to the backward raster scan order.

According to an embodiment, the image decoding device 100 may decode the determined one or more reference coding units. The image decoding device 100 may decode an image, based on the reference coding units determined as described above. A method of decoding the reference coding units may include various image decoding methods.

According to an embodiment, the image decoding device 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding device 100 may use the split shape mode information included in a sequence parameter set, a picture parameter set, a video parameter set, a slice header, a slice segment header, a tile header, or a tile group header. Furthermore, the image decoding device 100 may obtain, from the bitstream, a syntax element corresponding to the block shape information or the split shape mode information according to each largest coding unit, each reference coding unit, or each processing block, and may use the obtained syntax element.

Hereinafter, a method of determining a split rule, according to an embodiment of the disclosure will be described in detail.

The image decoding device 100 may determine a split rule of an image. The split rule may be predetermined between the image decoding device 100 and the image encoding device 2200. The image decoding device 100 may determine the split rule of the image, based on information obtained from a bitstream. The image decoding device 100 may determine the split rule based on the information obtained from at least one of a sequence parameter set, a picture parameter set, a video parameter set, a slice header, a slice segment header, a tile header, and a tile group header. The image decoding device 100 may determine the split rule differently according to frames, slices, tiles, temporal layers, largest coding units, or coding units.

The image decoding device 100 may determine the split rule based on a block shape of a coding unit. The block shape may include a size, shape, a ratio of width and height, and a direction of the coding unit. The image encoding device 2200 and the image decoding device 100 may pre-determine to determine the split rule based on the block shape of the coding unit. However, the embodiment is not limited thereto. The image decoding device 100 may determine the split rule based on the information obtained from the bitstream received from the image encoding device 2200.

The shape of the coding unit may include a square and a non-square. When the lengths of the width and height of the coding unit are the same, the image decoding device 100 may determine the shape of the coding unit to be a square. Also, when the lengths of the width and height of the coding unit are not the same, the image decoding device 100 may determine the shape of the coding unit to be a non-square.

The size of the coding unit may include various sizes, such as 4x4, 8x4, 4x8, 8x8, 16x4, 16x8, and to 256x256. The size of the coding unit may be classified based on the length of a long side of the coding unit, the length of a short side, or the area. The image decoding device 100 may apply the same split rule to coding units classified as the same group. For example, the image decoding device 100 may classify coding units having the same lengths of the long sides as having the same size. Also, the image decoding device 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding device 100 may adaptively determine the split rule based on the size of the coding unit. The image decoding device 100 may differently determine an allowable split shape mode based on the size of the coding unit. For example, the image decoding device 100 may determine whether splitting is allowed based on the size of the coding unit. The image decoding device 100 may determine a split direction according to the size of the coding unit. The image decoding device 100 may determine an allowable split type according to the size of the coding unit.

The split rule determined based on the size of the coding unit may be a split rule predetermined between the image encoding device 2200 and the image decoding device 100. Also, the image decoding device 100 may determine the split rule based on the information obtained from the bitstream.

The image decoding device 100 may adaptively determine the split rule based on a location of the coding unit. The image decoding device 100 may adaptively determine the split rule based on the location of the coding unit in the image.

Also, the image decoding device 100 may determine the split rule such that coding units generated via different splitting paths do not have the same block shape. However, an embodiment is not limited thereto, and the coding units generated via different splitting paths have the same block shape. The coding units generated via the different splitting paths may have different decoding processing orders. Because the decoding processing orders have been described above with reference to FIG. 12, details thereof are not provided again.

Hereinafter, a video encoding or decoding method according to an embodiment of the disclosure will be described in detail with reference to FIGS. 17 to 20, in which information about whether to apply an affine mode to a current block is received, when the information about whether to apply the affine mode indicates that the affine mode is to be applied, an affine parameter group is determined based on a history-based affine parameter group candidate list in which affine parameter groups of one or more blocks reconstructed in an affine mode before the current block are stored, and prediction is performed on the current block based on the affine parameter group.

FIG. 17 is a block diagram of a video encoding device according to an embodiment.

A video encoding device 1700 according to an embodiment may include a memory 1710, and at least one processor 1720 connected to the memory 1710. Operations of the video encoding device 1700 according to an embodiment may be performed by individual processors or by a control of a central processor. Also, the memory 1710 of the video encoding device 1700 may store data received from external devices and data generated by processors, for example, information about whether to apply an affine mode to a current block, a history-based affine parameter group candidate list in which affine parameter groups of one or more blocks reconstructed in an affine mode before the current block are stored, etc.

The processor 1720 of the video encoding device 1700 may determine whether to apply an affine mode to a current block, when it is determined that the affine mode is to be applied to the current block, determine an affine parameter group based on history-based affine parameter group candidate list in which affine parameter groups of one or more blocks encoded in an affine mode before the current block are stored, perform prediction on the current block

based on the affine parameter group, and encode information about whether to apply the affine mode to the current block.

Hereinafter, specific operations of a video encoding method will be described in detail with reference to FIG. 18, in which the video encoding device 1700 according to an embodiment determines whether to apply an affine mode to a current block, when it is determined that the affine mode is to be applied to the current block, determines an affine parameter group based on history-based affine parameter group candidate list in which affine parameter groups of one or more blocks encoded in an affine mode before the current block are stored, performs prediction on the current block based on the affine parameter group, and encodes information about whether to apply the affine mode to the current block.

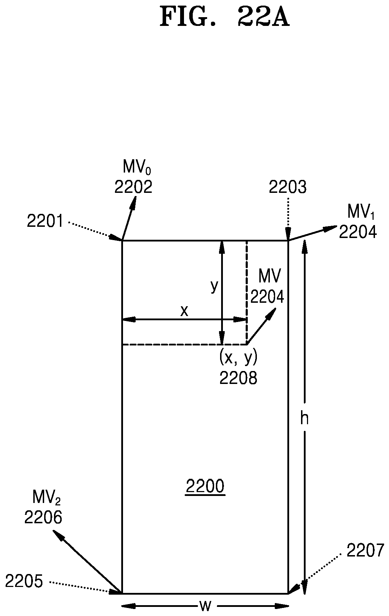

The term "affine parameter group" used herein refers to a set of affine parameters required to apply the affine mode, and the affine parameter will be described below in FIG. 22A.

FIG. 18 is a flowchart illustrating a video encoding method according to an embodiment.

Referring to FIG. 18, in operation S1810, the video encoding device 1700 may determine whether to apply an affine mode to a current block.

According to an embodiment, the affine mode may be indicate affine merge mode or an affine advanced motion vector prediction (AMVP) mode.

In operation S1820, when it is determined that the affine mode is to be applied to the current block, the video encoding device 1700 may determine an affine parameter group based on a history-based affine parameter group candidate list in which affine parameter groups of one or more blocks encoded in an affine mode before the current block are stored.

According to an embodiment, when an adjacent block encoded in an affine mode exists from among adjacent blocks of the current block, the affine parameter group may be determined based on affine parameter information of the adjacent block encoded in the affine mode and the history-based affine parameter group candidate list. The affine parameter information of the adjacent block encoded in the affine mode may be information of an affine merge mode candidate or an affine AMVP mode candidate of the current block.

In operation S1850, the video encoding device 1700 may perform prediction on the current block based on the affine parameter group.

According to an embodiment, the video encoding device 1700 may add the affine parameter group of the current block to the history-based affine parameter group candidate list.

According to an embodiment, when adding the affine parameter group of the current block to the history-based affine parameter group candidate list, in a case where the number of candidates included in the history-based affine parameter group candidate list is a predetermined maximum value, the video encoding device 1700 may remove the earliest-stored affine parameter candidate from the history-based affine parameter group candidate list.

According to an embodiment, when adding the affine parameter group of the current block to the history-based affine parameter group candidate list, in a case where the affine parameter group of the current block is the same as an affine parameter group existing in the history-based affine parameter group candidate list, the video encoding device 1700 may maintain the history-based affine parameter group candidate list.

According to an embodiment, in a case where the current block is a block to be encoded first in a predetermined area in which the current block is included, the video encoding device 1700 may reset the history-based affine parameter group candidate list, determine the affine parameter group based on the affine parameter information of the adjacent block encoded in the affine mode, which is located around the current block, and perform prediction on the current block based on the determined affine parameter group. The predetermined area may be a largest coding unit, a row of a largest coding unit, or a tile. Also, the video encoding device 1700 may add the affine parameter group of the current block to the history-based affine parameter group candidate list.

According to an embodiment, in a case where the current block is not the block to be encoded first in the predetermined area in which the current block is included, the video encoding device 1700 may determine the affine parameter group based on the affine parameter information of the adjacent block encoded in the affine mode, which is located around the current block, and the history-based affine parameter group candidate list, and perform prediction on the current block based on the determined affine parameter group. Also, the video encoding device 1700 may add the affine parameter group of the current block to the history-based affine parameter group candidate list.

In operation S1870, the video encoding device 1700 may encode information about whether to apply the affine mode to the current block.

According to an embodiment, whether to apply the affine mode to the current block may be determined by calculating a sum of transform difference (SATD) or a rate of distortion optimization (RDO), and information about whether to apply the affine mode to the current block may be encoded and signaled.

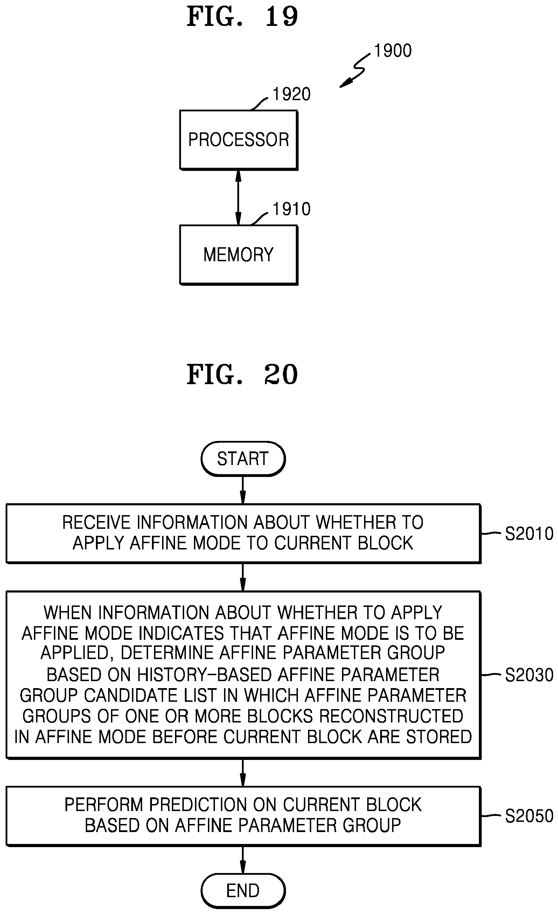

FIGS. 19 and 20 illustrate a block diagram of a video decoding device according to an embodiment and a flowchart of a video decoding method according to an embodiment, respectively corresponding to the video encoding device and the video encoding method described above.

FIG. 19 illustrates a block diagram of a video decoding device according to an embodiment.

A video decoding device 1900 according to an embodiment may include a memory 1910, and at least one processor 1920 connected to the memory 1910. Operations of the video decoding device 1900 according to an embodiment may be performed by individual processors or by a control of a central processor. Also, the memory 1910 of the video decoding device 1900 may store data received from external devices and data generated by processors, for example, information about whether to apply an affine mode to a current block, a history-based affine parameter group candidate list in which affine parameter groups of one or more blocks reconstructed in an affine mode before the current block are stored, etc.

The processor 1920 of the video decoding device 1900 may receive information about whether to apply an affine mode to a current block, when the information about whether to apply the affine mode indicates that the affine mode is to be applied, determine an affine parameter group based on a history-based affine parameter group candidate list in which affine parameter groups of one or more blocks reconstructed in an affine mode before the current block are stored, and perform prediction on the current block based on the affine parameter group.

Hereinafter, specific operations of a video decoding method will be described in detail with reference to FIG. 20, in which the video decoding device 1900 according to an embodiment receives information about whether to apply an affine mode to a current block, when the information about whether to apply the affine mode indicates that the affine mode is to be applied, determines an affine parameter group based on a history-based affine parameter group candidate list in which affine parameter groups of one or more blocks reconstructed in an affine mode before the current block are stored, and performs prediction on the current block based on the affine parameter group.

FIG. 20 illustrates a flowchart of a video decoding method according to an embodiment.

Referring to FIG. 20, in operation S2010, the video decoding device 1900 may receive information about whether to apply an affine mode to a current block.

According to an embodiment, information about whether to apply the affine mode to the current block may have been determined and signaled during an encoding process.

According to an embodiment, the affine mode may indicate an affine merge mode or an affine AMVP mode.

In operation S2030, the video decoding device 1900 may determine an affine parameter group based on a history-based affine parameter group candidate list in which affine parameter groups of one or more blocks reconstructed in an affine mode before the current block are stored.

According to an embodiment, when an adjacent block reconstructed in an affine mode exists from among adjacent blocks of the current block, the affine parameter group may be determined based on affine parameter information of the adjacent block reconstructed in the affine mode and the history-based affine parameter group candidate list. The affine parameter information of the adjacent block reconstructed in the affine mode may be information of an affine merge mode candidate or an affine AMVP mode candidate of the current block.

According to an embodiment, the video decoding device 1900 may add the affine parameter group of the current block to the history-based affine parameter group candidate list.

According to an embodiment, when adding the affine parameter group of the current block to the history-based affine parameter group candidate list, in a case where the number of candidates included in the history-based affine parameter group candidate list is a predetermined maximum value, the video decoding device 1900 may remove the earliest-stored affine parameter candidate from the history-based affine parameter group candidate list.

According to an embodiment, when adding the affine parameter group of the current block to the history-based affine parameter group candidate list, in a case where the affine parameter group of the current block is the same as an affine parameter group existing in the history-based affine parameter group candidate list, the video decoding device 1900 may maintain the history-based affine parameter group candidate list.

In operation S2050, the video decoding device 1900 may perform prediction on the current block based on the affine parameter group.

According to an embodiment, in a case where the current block is a block to be reconstructed first in a predetermined area in which the current block is included, the video decoding device 1900 may reset the history-based affine parameter group candidate list, determine the affine parameter group based on the affine parameter information of the adjacent block reconstructed in the affine mode, which is located around the current block, and perform prediction on the current block based on the determined affine parameter group. The predetermined area may be a largest coding unit, a row of a largest coding unit, or a tile. Also, the video decoding device 1900 may add the affine parameter group of the current block to the history-based affine parameter group candidate list.

According to an embodiment, in a case where the current block is not the block to be reconstructed first in the predetermined area in which the current block is included, the video decoding device 1900 may determine the affine parameter group based on the affine parameter information of the adjacent block reconstructed in the affine mode, which is located around the current block, and the history-based affine parameter group candidate list, and perform prediction on the current block based on the determined affine parameter group. Also, the video decoding device 1900 may add the affine parameter group of the current block to the history-based affine parameter group candidate list.

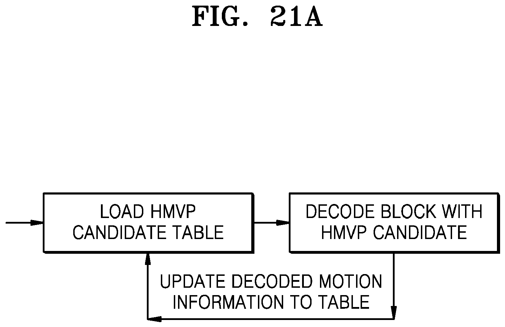

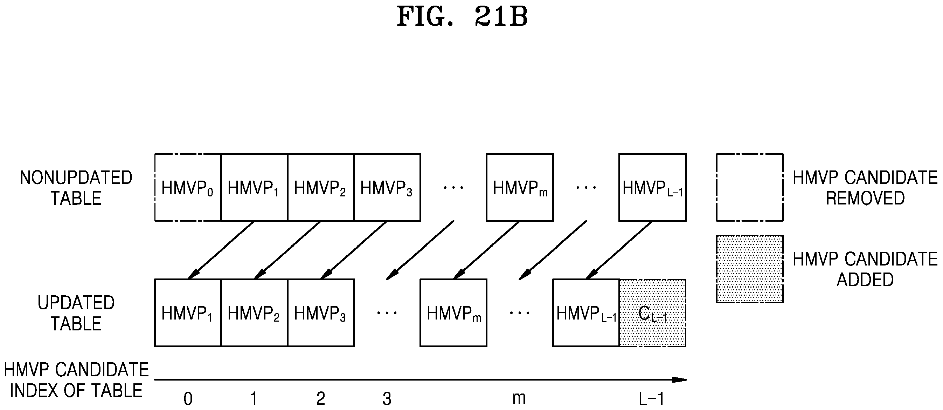

FIG. 21A illustrates a schematic diagram of history-based motion vector prediction (HMVP), and FIG. 21B illustrates a process of processing a list used for HMVP.

Referring to FIG. 21A, HMVP candidates in which pieces of motion information of a previously encoded block or a previously reconstructed block are stored are used for HMVP. In detail, an HMVP list is maintained through a process of loading a table in which HMVP candidates are stored, that is, an HMVP list, decoding the block based on the HMVP candidates, and updating motion information of the decoded block in an HMVP candidate table.

Referring to FIG. 21B, the HMVP list refers to a list of N motion vectors which are most recently decoded. When the number of motion vectors that are storable in the HMVP list is L, HMVP candidates from HMVP0 to HMVP-1 from indexes 0 to L-1 may be stored in the HMVP list before the HMVP list is updated. Thereafter, when the HMVP list is updated and then a new HMVP candidate is added, motion information of the earliest-stored HMVP0 among candidates stored in the HMVP list may be removed. That is, the HMVP list is updated according to first-in first-out (FIFO) logic. In addition, before adding the new HMVP candidate to the HMVP list, whether the same candidate as the new HMVP candidate exists among the existing HMVP candidates may be checked. As a result of the checking, when the same candidate exists, the new HMVP candidate may not be added.

FIG. 22A illustrates in detail a method of deriving a motion vector applied to a sample of a current block 2200 in an affine mode.

In the affine mode, at least three affine parameters are required to derive a motion vector of a sample of the current block 2200. In detail, the affine mode may include a 6-parameter affine mode, a 4-parameter affine mode, and a 3-parameter affine mode. Hereinafter, a method of deriving a motion vector of a sample of the current block 2200 according to each affine mode will be described.

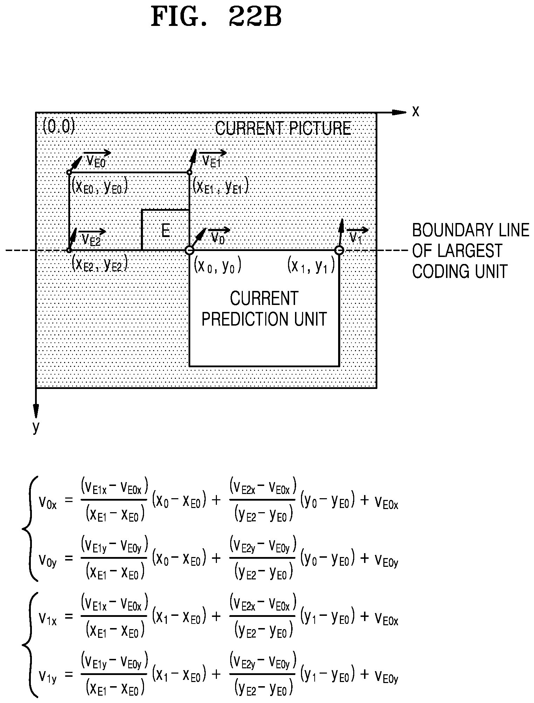

In the 6-parameter affine mode, the processor 1720 may obtain three motion vectors 2202, 2204, and 2206 from adjacent samples 2201, 2203, and 2205 of the current block 2200. A first motion vector 2202 may be obtained from adjacent samples of an upper-left coordinate 2201 of the current block 2200. Also, a second motion vector 2204 may be obtained from adjacent samples of an upper-right coordinate 2203 of the current block 2200. A third motion vector 2206 may be obtained from adjacent samples of a lower-left coordinate 2205 of the current block 2200. In FIG. 22, the third motion vector 2206 is obtained based on the lower-left coordinate 2205 of the current block 2200, but may also be obtained based on a lower-right coordinate 2207 of the current block 2200 according to embodiments. Also, the processor 1720 may determine an x component and a y component of the first motion vector 2202, an x component and a y component of the second motion vector 2204, and an x component and a y component of the third motion vector 2206 as affine parameters.

According to an embodiment, the first motion vector 2202 may be determined as an average of motion vectors of a plurality of adjacent blocks adjacent to the upper-left coordinate 2201 of the current block 2200. Similarly, the second motion vector 2204 may be determined as an average of motion vectors of a plurality of adjacent blocks adjacent to the upper-right coordinate 2203 of the current block 2200. Also, the third motion vector 2206 may be determined as an average of motion vectors of a plurality of adjacent blocks adjacent to the lower-left coordinate 2205 or the lower-right coordinate 2207 of the current block 2200.

A motion vector 2210 of a sample 2208 of the current block 2200 may be determined based on the first motion vector 2202, the second motion vector 2204, and the third motion vector 2206 according to Equations 1 to 3.

In Equations 1 to 3, x denotes a horizontal distance difference between the upper-left coordinate 2201 of the current block 2200 and the sample 2208 of the current block 2200, and y denotes a vertical distance difference between the upper-left coordinate 2201 of the current block 2200 and the sample 2208 of the current block 2200. MV0 denotes the first motion vector 2202, MV1 denotes the second motion vector 2204, and MV2 denotes the third motion vector 2206. MV denotes the motion vector 2210 of the sample 2208 of the current block 2200. w denotes a width of the current block 2200, and h denotes a height of the current block 2200. dMVx denotes a horizontal rate of change of the motion vector 2210, and dMVy denotes a vertical rate of change of the motion vector 2210.

[Equation 1]

$$dMVx = (MV1 - MV0)/w$$

[Equation 2]

$$dMVy = (MV2 - MV0)/h$$

[Equation 3]

$$MV = MV0 + x \cdot dMVx + y \cdot dMVy$$

Equation 1 indicates a method of obtaining the horizontal rate of change (dMVx) of the motion vector 2210. According to Equation 1, a value obtained by subtracting the first motion vector 2202 from the second motion vector 2204 and dividing the resultant value by the width of the current block 2200 is determined as the horizontal rate of change of the motion vector 2210.

Equation 2 indicates a method of obtaining the vertical rate of change (dMVy) of the motion vector 2210. According to Equation 2, a value obtained by subtracting the first motion vector 2202 from the third motion vector 2206 and dividing the resultant value by the height of the current block 2200 is determined as the vertical rate of change of the motion vector 2210.

Equation 3 indicates a method of obtaining the motion vector 2210. According to Equation 3, the motion vector 2210 is determined as a value obtained by adding the first motion vector (MV0) 2202 and inner products of the coordinates (x, y) of the sample 2208 of the current block 2200 with respect to the upper-left coordinate 2201 of the current block 2200 and the vertical rate of change and the horizontal rate of change (dMVx, dMVy).

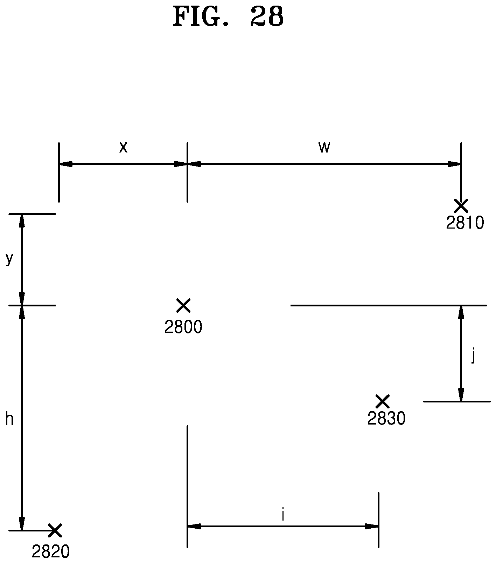

Motion vectors of all samples or sub-blocks included in the current block 2200 may be determined according to Equations 1 to 3. According to Equations 1 to 3, the motion vector of the sample may be determined different according to a location of the sample. Equations 1 and 2 may be applied to a case where vertical components of coordinates from which the first motion vector 2202 and the second motion vector 2204 are extracted are the same and horizontal components of coordinates from which the first motion vector 2202 and the third motion vector 2206 are extracted are the same. Accordingly, a generalized equation of determining a motion vector of the current block 2200 will be described below with reference to FIG. 28.

In the 6-parameter affine mode, the motion vector 2210 is determined by three motion vectors, and thus a reference block of the current block 2200 may be zoomed, rotated, and sheared from the current block 2200.

In the 4-parameter affine mode, the processor 1720 may obtain two motion vectors 2202 and 2204 from adjacent samples of the current block 2200. As in the 6-parameter affine mode, the first motion vector 2202 may be obtained from adjacent samples of the upper-left coordinate of the current block 2200. Similarly, the second motion vector 2204 may be obtained from adjacent samples of the upper-right coordinate of the current block 2200. Also, the processor 1720 may determine the x component and the y component of the first motion vector 2202 and the x component and the y component of the second motion vector 2204 as affine parameters.

In the 4-parameter affine mode, the third motion vector 2206 is not determined from the lower-left coordinate or the lower-right coordinate of the current block 2200, but instead determined by combining the first motion vector 2202 and the second motion vector 2204.

Equations 4 and 5 indicate methods of determining the third motion vector 2206 by combining the first motion vector 2202 and the second motion vector 2204. In Equations 4 and 5, x denotes a horizontal component of a motion vector and y denotes a vertical component of a motion vector. MV0 denotes the first motion vector 2202, MV1 denotes the second motion vector 2204, and MV2 denotes the third motion vector 2206. w denotes a width of the current block 2200, and h denotes a height of the current block 2200.

[Equation 4]

$$MV2[x] = (MV1[y] - MV0[y])*w/h + MV0[x]$$

[Equation 5]

$$MV2[y] = (MV0[x] - MV1[x])*w/h + MV0[y]$$

According to Equation 4, a horizontal coordinate value (MV2[x]) of the third motion vector 2206 is determined as a value ((MV1[y]-MV0[y])*w/h + MV0[x]), which is obtained by adding a horizontal coordinate value (MV0[x]) of the first motion vector 2202 to a product of a value (MV1[y] - MV0[y]) obtained by subtracting a vertical coordinate value of the first motion vector 2202 from a vertical coordinate value of the second motion vector 2204, and a value (w/h) obtained by dividing the width of the current block by the height of the current block.

According to Equation 5, a vertical coordinate value (MV2[y]) of the third motion vector 2206 is determined as a value ((MV0[x] - MV1[x])*w/h + MV0[y]), which is obtained by adding a vertical coordinate value (MV0[y]) of the first motion vector 2202 to a value (MV0[x] - MV1[x]), obtained by subtracting a horizontal coordinate value of the second motion vector 2204 from a horizontal coordinate value of the first motion vector 2202, and a value (w/h) obtained by dividing the width of the current block by the height of the current block.

In the 4-parameter affine mode, the x component and the y component of the third motion vector 2206 are derived from the first motion vector 2202 and the second motion vector 2204. Accordingly, unlike the 6-parameter affine mode, in the 4-parameter affine mode, a reference block of the current block 2200 may only be zoomed and rotated from the current block 2200 based on first motion vector 2202 and the second motion vector 2204. That is, in the 4-parameter affine mode, the current block 2200 is not sheared.

In the 3-parameter affine mode, the processor 1720 may obtain two motion vectors 2202 and 2204 from adjacent samples of the current block 2200. The first motion vector 2202 may be obtained from adjacent samples of the upper-left coordinate of the current block 2200. Similarly, the second motion vector 2204 may be obtained from adjacent samples of the upper-right coordinate of the current block 2200. However, unlike the 4-parameter affine mode, in the 3-parameter affine mode, only the x component or the y component is obtained from the second motion vector 2204. Therefore, the processor 1720 may determine the x component or the y component of the second motion vector 2204 as well as the x component and the y component of the first motion vector 2202 as affine parameters.

When the x component of the second motion vector 2204 is obtainable, the y component of the second motion vector 2204 is obtained from the y component of the first motion vector 2202. On the contrary, when the y component of the second motion vector 2204 is obtainable, the x component of the second motion vector 2204 is obtained from the x component and the y component of the first motion vector 2202 and the y component of the second motion vector 2204. Equations 6 and 7 below indicate methods of determining the y component and the x component of the second motion vector 2204, respectively.

In Equations 6 and 7, x denotes a horizontal component of a motion vector and y denotes a vertical component of a motion vector. MV0 denotes the first motion vector 2202, MV1 denotes the second motion vector 2204, and MV2 denotes the third motion vector. w denotes a width of the current block 2200, and h denotes a height of the current block 2200.

$$[\text{Equation 6}]$$

$$MV1[y] = MV0[y]$$

$$[\text{Equation 7}]$$

$$MV1[x] = sqrt(w2 - (MV1[y] - MV0[y])2) + MV0[x] - w$$

According to Equation 6, when only the x component of the second motion vector 2204 is obtainable, the processor 1720 determines the y component of the second motion vector 2204 to be the same as the y component of the first motion vector 2202.

According to Equation 7, when only the y component of the second motion vector 2204 is obtainable, the processor 1720 determines the x component of the second motion vector 2204 based on the x component and the y component (MV0[x], MV0[y]) of the first motion vector 2202 and the y component (MV1[y]) of the second motion vector 2204.

Also, the x component and the y component of the third motion vector 2206 are determined according to Equations 4 and 5, as in the 4-parameter affine mode. In the 3-parameter affine mode, together with the third motion vector 2206, a component that is not obtainable among the x component and the y component of the second motion vector 2204 is derived from a component that is obtainable among the x component and the y component of the first motion vector 2202 and the second motion vector 2204. Accordingly, in the 3-parameter affine mode, the reference block of the current block 2200 may only be zoomed or rotated from the current block 2200 based on the first motion vector 2202 and the second motion vector 2204. When the x component of the second motion vector 2204 is obtainable, the reference block of the current block 2200 may only be zoomed from the current block 2200. On the contrary, the y component of the second motion vector 2204 is obtainable, the reference block of the current block 2200 may only be rotated from the current block 2200.

FIG. 22B illustrates a method of deriving an affine parameter group from surrounding information in an affine mode.

The affine mode refers to an inter prediction method of obtaining motion vectors for samples included in a current block by affine-transforming motion vectors obtained from adjacent samples of the current block. The affine mode may include an affine merge mode, an affine AMVP mode (or affine inter mode), etc.

A method of deriving an affine parameter group candidate from a block to which an affine mode is applied around a current block will be described in detail with reference to FIG. 22B.

In the affine merge mode or the affine AMVP mode, an affine parameter group for applying an affine mode to a current block may be obtained from an affine merge candidate list or an affine AMVP candidate list. However, when an appropriate affine parameter group is not obtainable from the affine merge candidate list or the affine AMVP candidate list, the affine parameter group of the current block may be derived from information of an adjacent block.

In FIG. 22B, when an upper-left coordinate of a current picture is (0, 0), by using a motion vector $\overrightarrow{v_{E0}}$ in the upper left ($x_{E0}$, $y_{E0}$), a motion vector $\overrightarrow{v_{E1}}$ in the upper right ($x_{E1}$, $y_{E1}$), and a motion vector $\overrightarrow{v_{E2}}$ in the lower left ($x_{E2}$, $y_{E2}$) of an upper-left adjacent block to which an affine mode is applied, among adjacent blocks of a current prediction unit included in the current picture, a motion vector $\overrightarrow{v_0}$ in the upper left ($x_0$, $y_0$) and a motion vector $\overrightarrow{v_1}$ in the upper right ($x_1$, $y_1$) of the current prediction unit may be derived in the same manner as in the equations of FIG. 22B. In Equations of FIG. 22B, $v_{E0x}$, $v_{E1x}$, and $v_{E2x}$ denote x component vectors of $\overrightarrow{v_{E0}}$, $\overrightarrow{v_{E1}}$, and $\overrightarrow{v_{E2}}$, respectively, and $v_{E0y}$, $v_{E1y}$, and $v_{E2y}$ denote y component vectors of $\overrightarrow{v_{E0}}$, $\overrightarrow{v_{E1}}$, and $\overrightarrow{v_{E2}}$, respectively.

When the affine parameter group is derived in the method described above, there is a problem that occurs when an upper boundary line of the current prediction unit coincides with an upper boundary line of a largest coding unit. In detail, because a motion vector line buffer is used to store motion information of blocks in contact with the upper side of the largest coding unit, when the upper side of the current prediction unit is the upper boundary line of the largest coding unit, there is a problem that an additional line buffer is required instead of a general line buffer, in order to derive a motion vector $v_0$ in the upper left ($x_0$, $y_0$) and a motion vector $v_1$ in the upper right ($x_1$, $y_1$) of the current prediction unit in FIG. 22B. This is because in the general line buffer, only the motion vector $v_{E2}$ is accessible and the motion vectors $v_{E0}$ and $v_{E1}$ are not accessible.

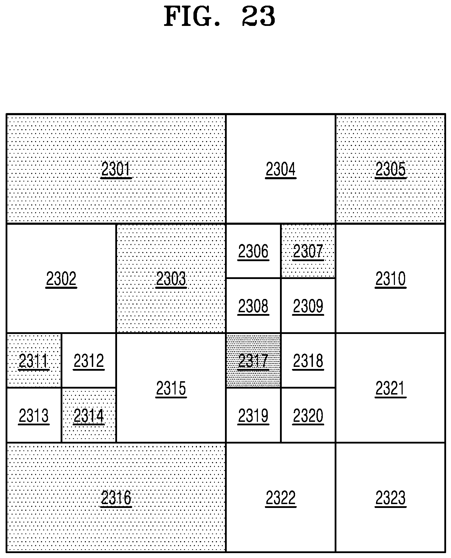

To solve this problem, a history-based affine parameter group candidate list may be used. The history-based affine parameter candidate group list will be described in detail in FIG. 23.

FIG. 23 illustrates a method of determining an affine parameter group candidate of a current block based on a history-based affine parameter group candidate list.

With reference to FIG. 23, when a current frame 2300 is split into a plurality of blocks 2301 to 2323 and an affine mode is to be applied to a current block 2317, blocks 2301, 2303, 2305, 2307, 2311, 2314, and 2316 reconstructed in the affine mode before the current block exist from among the blocks. Information of the blocks 2301, 2303, 2305, 2307, 2311, 2314, and 2316 reconstructed in the affine mode before the current block is separately stored in the history-based affine parameter group candidate list.

First, an affine parameter group required for the current block to which the affine mode is to be applied may be obtained from an affine merge candidate list or an affine AMVP candidate list of the current block according to an affine merge mode or an affine AMVP mode. However, when the affine parameter group for the current block is not obtainable from the affine merge candidate list or the affine AMVP candidate list of the current block, the affine parameter group of the current block may be determined by obtaining affine information from the history-based affine parameter group candidate list in which affine parameter groups of the blocks reconstructed in the affine mode before the current block are stored.

For example, in FIG. 23, the affine parameter group of the current block may be determined from the history-based affine parameter group candidate list in which affine parameter groups of the blocks 2301, 2303, 2305, 2307, 2311, 2314, and 2316 reconstructed by applying the affine mode before the current block 2317 are stored. Accordingly, the affine parameter group of the current block may be determined based on affine information on a block other than an adjacent block which is adjacent to the current block 2317.

Also, when selecting an available affine parameter group candidate from the history-based affine parameter group candidate list to determine the affine parameter group for the current block, a pruning process may be applied to select a more appropriate model.

According to an embodiment, only when a boundary of the current block is shared, an affine parameter group candidate in the history-based affine parameter group candidate list may be considered.

According to an embodiment, affine parameter group candidates may be arranged in the history-based affine parameter group candidate list according to a distance from a location of the current block, for example, a center location or a location of an upper-left corner of the current block.

According to an embodiment, affine parameter group candidates in the history-based affine parameter group candidate list within a specific threshold distance from the current block may be considered.

According to an embodiment, affine parameter group candidates in the history-based affine parameter group candidate list may be considered, when an x-coordinate at a right edge of a block reconstructed in the affine mode before the current block and an x-coordinate at an upper-left corner of the current block are the same as each other, or when a y-coordinate at a lower edge of the block reconstructed in the affine mode before the current block and a y-coordinate at the upper-left corner of the current block are the same as each other.

In this case, unlike deriving the affine parameter group from the motion information of the adjacent block in FIG. 22B, the affine parameter group may be determined from the history-based affine parameter group candidate list in which N predetermined affine parameter group candidates are stored. Therefore, the amount of buffer may be reduced by using a buffer having an appropriate capacity in which N predetermined affine parameter group candidates are stored, instead of an unnecessary additional line buffer.

The affine parameter group may include a width and a height of a block, an upper-left location, an upper-left motion vector, an upper-right motion vector, and a lower-left motion vector, may include an upper-left location, an upper-right location, a lower-left location, an upper-left motion vector, an upper-right motion vector, and a lower-left motion vector, may include a width, a height, an upper-left location, an upper-left motion vector, and an upper-right motion vector, or may include a width, a height, an upper-left location, an upper-left motion vector, a vertical amount of change of a motion vector, and a horizontal amount of change of a motion vector.

FIG. 24 illustrates a flowchart of a video encoding method according to another embodiment.

The video encoding device 1700 of FIG. 17 may perform an operation according to the video encoding method of FIG. 24.

The video encoding device 1700 may include the memory 1710 and the at least one processor 1720 connected to the memory 1710. Operations of the video encoding device 1700 according to an embodiment may be performed by individual processors or by a control of a central processor. Also, the memory 1710 of the video encoding device 1700 may store data received from external devices and data generated by processors, for example, information about a history-based motion vector candidate list in which motion vectors of blocks encoded before a current block are stored, etc.

The processor 1720 of the video encoding device 1700 may determine whether a current block is a block to be encoded first in a predetermined area in which the current block is included, when the current block is the block to be encoded first, reset a history-based motion vector candidate list in which motion vectors of blocks encoded before the current block are stored and perform prediction on the current block based on motion information of an adjacent block to the current block, and when the current block is not the block to be encoded first, perform prediction on the current block based on the motion information of the adjacent block to the current block and the history-based motion vector candidate list.

Referring to FIG. 24, in operation S2410, the video encoding device 1700 may determine whether a current block is a block to be encoded first in a predetermined area in which the current block is included.

According to an embodiment, the predetermined area may be a largest coding unit (CTU), a row of a largest coding unit (CTU ROW), or a tile. In operation S2430, when the current block is the block to be encoded first, the video encoding device 1700 may reset a history-based motion vector candidate list in which motion vectors of blocks encoded before the current block are stored and perform prediction on the current block based on motion information of an adjacent block to the current block.

In operation S2450, when the current block is not the block to be encoded first, the video encoding device 1700 may perform prediction on the current block based on the motion information of the adjacent block to the current block and the history-based motion vector candidate list.

According to an embodiment, the video encoding device 1700 may store a motion vector of the current block in the history-based motion vector candidate list.

According to an embodiment, when storing the motion vector of the current block in the history-based motion vector candidate list, in a case where the number of motion vector candidates stored in the history-based motion vector candidate list is a predetermined maximum value, the video encoding device 1700 may remove a motion vector of the earliest-stored block from the history-based motion vector candidate list.

According to an embodiment, when storing the motion vector of the current block in the history-based motion vector candidate list, in a case where the motion vector of the current block is the same as a motion vector existing in the history-based motion vector candidate list, the video encoding device 1700 may maintain the history-based motion vector candidate list.

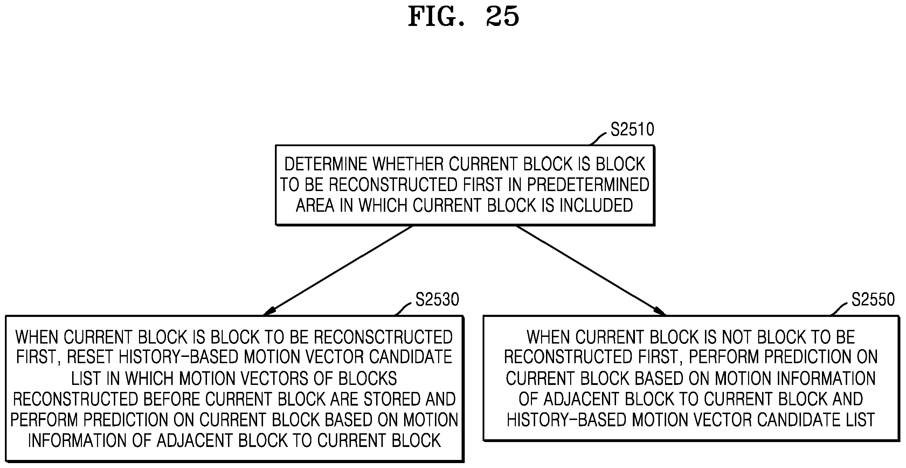

FIG. 25 illustrates a flowchart of a video decoding method according to another embodiment.

The video decoding device 1900 may perform an operation according to the video decoding method.

The video decoding device 1900 may include the memory 1910 and the at least one processor 1920 connected to the memory 1910. Operations of the video decoding device 1900 according to an embodiment may be performed by individual processors or by a control of a central processor. Also, the memory 1910 of the video decoding device 1900 may store data received from external devices and data generated by processors, for example, information about a history-based motion vector candidate list in which motion vectors of blocks reconstructed before a current block are stored, etc.

The processor 1920 of the video decoding device 1900 may determine whether a current block is a block to be reconstructed first in a predetermined area in which the current block is included, when the current block is the block to be reconstructed first, reset a history-based motion vector candidate list in which motion vectors of blocks reconstructed before the current block are stored and perform prediction on the current block based on motion information of an adjacent block to the current block, and when the current block is not the block to be reconstructed first, perform prediction on the current block based on the motion information of the adjacent block to the current block and the history-based motion vector candidate list.

Referring to FIG. 25, in operation S2510, the video decoding device 1900 may determine whether a current block is a block to be reconstructed first in a predetermined area in which the current block is included.

According to an embodiment, the predetermined area may be a largest coding unit (CTU), a row of a largest coding unit (CTU ROW), or a tile.

In operation S2530, when the current block is the block to be reconstructed first, the video decoding device 1900 may reset a history-based motion vector candidate list in which motion vectors of blocks reconstructed before the current block are stored and perform prediction on the current block based on motion information of an adjacent block to the current block.

In operation S2550, when the current block is not the block to be reconstructed first, the video decoding device 1900 may perform prediction on the current block based on the motion information of the adjacent block to the current block and the history-based motion vector candidate list.

According to an embodiment, the video decoding device 1900 may store a motion vector of the current block in the history-based motion vector candidate list.

According to an embodiment, when storing the motion vector of the current block in the history-based motion vector candidate list, in a case where the number of motion vector candidates stored in the history-based motion vector candidate list is a predetermined maximum value, the video decoding device 1900 may remove a motion vector of the earliest-stored block from the history-based motion vector candidate list.

According to an embodiment, when storing the motion vector of the current block in the history-based motion vector candidate list, in a case where the motion vector of the current block is the same as a motion vector existing in the history-based motion vector candidate list, the video decoding device 1900 may maintain the history-based motion vector candidate list.

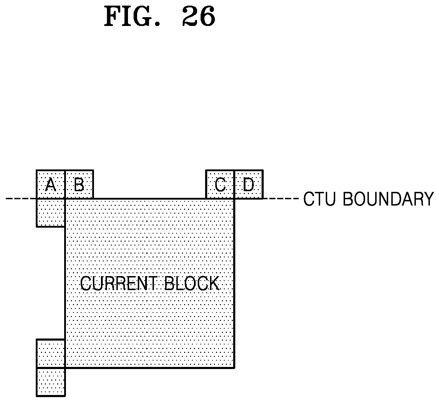

FIG. 26 illustrates a line buffer required to access motion information at a boundary of a largest coding unit.

Referring to FIG. 26, when the upper side of a current block coincides with an upper boundary line of a largest coding unit, blocks A, B, C, and D that the current block can refer to are located above the largest coding unit including the current block, and thus access to a motion vector line buffer is required to use motion information of the blocks A, B, C, and D. Access to the line buffer may be completely eliminated by using a history-based motion vector candidate list in which motion vectors of blocks reconstructed before the current block are stored. Even though the access to the line buffer is completely eliminated, derivation of an AMVP candidate or a merge candidate only affects blocks immediately below the upper boundary line of the largest coding unit, and thus the impact on performance is minimized.

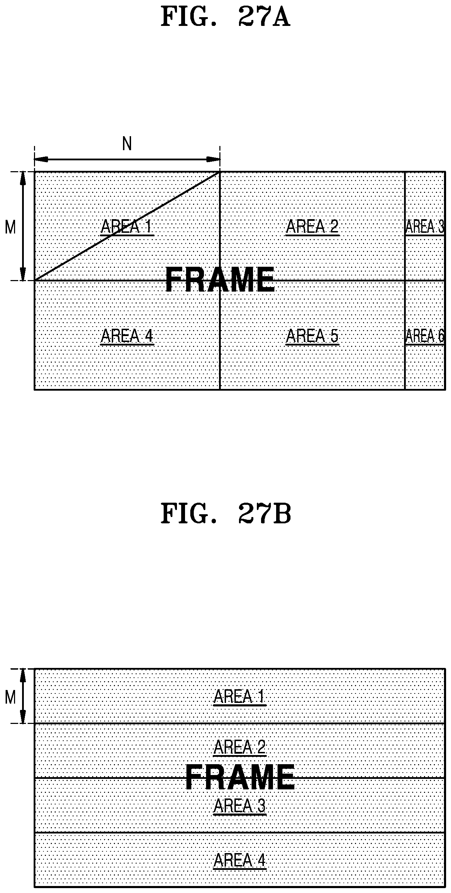

FIG. 27A illustrates an example of identifying each area having a history-based motion vector candidate list in one frame, and FIG. 27B illustrates another example of identifying each area having a history-based motion vector candidate list in one frame.

When the history-based motion vector candidate list is used, all blocks processed before the current block may be requested according to a coding order. In this case, because adjacent blocks must be completely processed, efficient parallel processing is impossible.

A method of using a plurality of history-based motion vector candidate lists based on a certain area, that is, a method of using a history-based motion vector candidate list for each certain area, will be described in detail with reference to FIGS. 27A and 27B. In detail, when accessing a history-based motion vector candidate list of a current block, a history-based motion vector candidate list belonging to a certain area corresponding to the current block is selected, and when the history-based motion vector candidate list is updated, the history-based motion vector candidate list in the certain area corresponding to the current block is updated. Accordingly, because each area has a history-based motion vector candidate list, dependency on other areas may be removed and efficient parallel processing may be allowed.

Referring to FIG. 27A, a current frame (or current picture) may be divided into areas 1 to 6, and each history-based motion vector candidate list may be used. In detail, a history-based motion vector candidate list in which motion vector candidates of the area 1 are stored is used for a block belonging to the area 1 having a size of MxN, and when prediction is performed on a block of the area 2, the history-based motion vector candidate list may be reset. Accordingly, when prediction is performed on the area 2, samples of the area 2 may be reconstructed without being dependent on data of samples of the area 1. Thereafter, motion vector candidates of reconstructed blocks belonging to the area 2 may be stored in the history-based motion vector candidate list.

The areas 1 to 6 may be a tile unit, a slice unit, a largest coding unit, etc.

Referring to FIG. 27B, a current frame (or current picture) may be divided into areas 1 to 4, and each history-based motion vector candidate list may be used. In detail, a history-based motion vector candidate list in which motion vector candidates of the area 1 are stored is used for a block belonging to the area 1 having M rows, and when prediction is performed on a block of the area 2, the history-based motion vector candidate list may be reset. Accordingly, when prediction is performed on the area 2, samples of the area 2 may be reconstructed without being dependent on data of samples of the area 1. Thereafter, motion vector candidates of reconstructed blocks belonging to the area 2 may be stored in the history-based motion vector candidate list.

The areas 1 to 4 may be a tile unit, a slice unit, a largest coding unit, etc. Also, the areas 1 to 4 may be a row of a largest coding unit (CTU row).

FIG. 28 illustrates a method of determining a method of determining a motion vector of a current block in an affine mode. Equations 8 to 10 below indicate a method of determining a motion vector of a current block according to motion vector extraction locations 2800, 2810, and 2820 of FIG. 28.

In Equations 8 and 9, w denotes a horizontal distance between a first motion vector extraction location 2800 and a second motion vector extraction location 2810. h denotes a vertical distance between the first motion vector extraction location 2800 and a third motion vector extraction location 2820. x denotes a horizontal distance between the first motion vector extraction location 2800 and the third motion vector extraction location 2820. y denotes a vertical distance between the first motion vector extraction location 2800 and the second motion vector extraction location 2810.

$P_0$ denotes a first motion vector, $P_1$ denotes a second motion vector, and $P_2$ denotes a third motion vector. dx and dy denote a horizontal amount of change and a vertical amount of change, respectively.

[Equation 8]

$$dx = \frac{(hP_1 - yP_2) - (hP_0 - yP_0)}{wh - xy}$$

[Equation 9]

$$dy = \frac{(xP_1 - wP_2) - (xP_0 - wP_0)}{xy - wh}$$

The horizontal amount of change is determined according to Equation 8, and the vertical amount of change is determined according to Equation 9. Further, according to Equation 10, a motion vector of a sample 2830 of the current block is determined based on the horizontal amount of change and the vertical amount of change. In Equation 10, Pa denotes the motion vector of the sample 2830 of the current block. Also, i denotes a horizontal distance between the first motion vector extraction location 2800 and the sample 2830 of the current block, and j denotes a vertical distance between the first motion vector extraction location 2800 and the sample 2830 of the current block.

[Equation 10]

$$Pa = P0 + idx + jdy$$

When three motion vectors and an extraction location of each motion vector are given according to Equations 8 to 10, motion vectors of samples included in the current block may be determined.

So far, various embodiments have been described. It will be understood by one of ordinary skill in the art to which the disclosure belongs that modifications can be made within a range not deviating from the intrinsic properties of the disclosure. Therefore, the disclosed embodiments should be considered from a descriptive standpoint rather than a restrictive standpoint. The scope of the disclosure is defined in the accompanying claims rather than the above detailed description, and it should be noted that all differences falling within the claims and equivalents thereof are included in the scope of the disclosure.

Meanwhile, the embodiments of the disclosure may be written as a program that is executable on a computer, and implemented on a general-purpose digital computer that operates a program using a computer-readable recording medium. The computer-readable recording medium may include a storage medium, such as a magnetic storage medium (for example, read only memory (ROM), a floppy disk, a hard disk, etc.) and an optical reading medium (for example, compact disc ROM (CD-ROM), digital versatile disc (DVD), etc.).

**Claims**

1. A video decoding method comprising:

    receiving information about whether to apply an affine mode to a current block;
    when the information about whether to apply the affine mode indicates that the affine mode is to be applied, determining an affine parameter group based on a history-based affine parameter group candidate list in which affine parameter groups of one or more blocks reconstructed in an affine mode before the current block are stored; and
performing prediction on the current block, based on the affine parameter group.

2. The video decoding method of claim 1, wherein, when an adjacent block reconstructed in an affine mode exists from among adjacent blocks to the current block, the affine parameter group is determined based on affine parameter information of the adjacent block reconstructed in the affine mode and the history-based affine parameter group candidate list.

3. The video decoding method of claim 1, further comprising adding the affine parameter group of the current block to the history-based affine parameter group candidate list.

4. The video decoding method of claim 3, further comprising, when adding the affine parameter group of the current block to the history-based affine parameter group candidate list, in a case where a number of candidates included in the history-based affine parameter group candidate list is a predetermined maximum value, removing an earliest-stored affine parameter candidate from the history-based affine parameter group candidate list.

5. The video decoding method of claim 3, further comprising, when adding the affine parameter group of the current block to the history-based affine parameter group candidate list, in a case where the affine parameter group of the current block is the same as an affine parameter group existing in the history-based affine parameter group candidate list, maintaining the history-based affine parameter group candidate list.

6. The video decoding method of claim 1, wherein the affine mode indicates an affine merge mode or an affine advanced motion vector prediction (AMVP) mode.

7. A video encoding method comprising:

determining whether to apply an affine mode to a current block;
when it is determined that the affine mode is to be applied to the current block, determining an affine parameter group based on a history-based affine parameter group candidate list in which affine parameter groups of one or more blocks encoded in an affine mode before the current block are stored;
performing prediction on the current block, based on the affine parameter group; and
encoding information about whether to apply the affine mode to the current block.

8. The video encoding method of claim 7, wherein, when an adjacent block encoded in an affine mode exists from among adjacent blocks to the current block, the affine parameter group is determined based on affine parameter information of the adjacent block encoded in the affine mode and the history-based affine parameter group candidate list.

9. The video encoding method of claim 7, further comprising adding the affine parameter group of the current block to the history-based affine parameter group candidate list.

10. The video encoding method of claim 9, further comprising, when adding the affine parameter group of the current block to the history-based affine parameter group candidate list, in a case where a number of candidates included in the history-based affine parameter group candidate list is a predetermined maximum value, removing an earliest-stored affine parameter candidate from the history-based affine parameter group candidate list.

11. The video encoding method of claim 9, further comprising, when adding the affine parameter group of the current block to the history-based affine parameter group candidate list, in a case where the affine parameter group of the current block is the same as an affine parameter group existing in the history-based affine parameter group candidate list, maintaining the history-based affine parameter group candidate list.

12. A video decoding method comprising:

determining whether a current block is a block to be reconstructed first in a predetermined area in which the current block is included;
when the current block is the block to be reconstructed first, resetting a history-based motion vector candidate list in which motion vectors of blocks reconstructed before the current block are stored and performing prediction on the current block, based on motion information of an adjacent block to the current block; and
when the current block is not the block to be reconstructed first, performing prediction on the current block, based on the motion information of the adjacent block to the current block and the history-based motion vector candidate list.

13. The video decoding method of claim 12, further comprising storing a motion vector of the current block in the history-based motion vector candidate list.

14. The video decoding method of claim 13, further comprising, when storing the motion vector of the current block in the history-based motion vector candidate list, in a case where a number of motion vector candidates stored in the history-based motion vector candidate list is a predetermined maximum value, removing a motion vector of an earliest-stored block from the history-based motion vector candidate list.

15. The video decoding method of claim 13, further comprising, when storing the motion vector of the current block in the history-based motion vector candidate list, in a case where the motion vector of the current block is the same as a motion vector existing in the history-based motion vector candidate list, maintaining the history-based motion vector candidate list.

# FIG. 1

BITSTREAM

↓

```
┌──────────────────────────────┐ ⌐100
│                              │
│   ┌──────────────────┐ ⌐110  │
│   │                  │       │
│   │    RECEIVER      │       │
│   │                  │       │
│   └──────────────────┘       │
│                              │
│   ┌──────────────────┐ ⌐120  │
│   │                  │       │
│   │    DECODER       │       │
│   │                  │       │
│   └──────────────────┘       │
│                              │
└──────────────────────────────┘
```

↓

OUTPUT IMAGE

# FIG. 2

( START )

↓

| OBTAIN BIN STRING CORRESPONDING TO SPLIT SHAPE MODE | — 210 |

↓

| DETERMINE SPLIT RULE | — 220 |

↓

| SPLIT CODING UNIT INTO PLURALITY OF CODING UNITS | — 230 |

↓

( END )

# FIG. 3

EP 3 855 746 A1

300

310a  310b  310b  310c  310d  310d  310e  310e  310e

310f

310f

310f

310c  310d  310d

# FIG. 4

## FIG. 5

# FIG. 6

# FIG. 7

# FIG. 8

800

810a 810b

810c

830

820a
820b

820c
820d
820e

# FIG. 9

# FIG. 10

EP 3 855 746 A1

# FIG. 11

EP 3 855 746 A1

# FIG. 12

# FIG. 13

| BLOCK SHAPE / DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

# FIG. 14

1400

DEPTH=D

1402a    1402b

PID 0
DEPTH=D

PID 1
DEPTH=D

1404a

PID 0
DEPTH=D

PID 1
DEPTH=D

1404b

1406a    1406b

PID 0
DEPTH=D+1

PID 1
DEPTH=D+1

PID 2
DEPTH=D+1

PID 3
DEPTH=D+1

1406c    1406d

1410

DEPTH=D

PID 0
DEPTH=D+1    1412a

PID 1
DEPTH=D+1    1412b

PID 0
DEPTH=D+1    1414a

PID 1
DEPTH=D+1    1414b

PID 3
DEPTH=D+1    1414c

1420

DEPTH=D

1422a    1422b

PID 0
DEPTH=D+1

PID 1
DEPTH=D+1

1424a  1424b  1424c

PID 0
DEPTH=
D+1

PID 1
DEPTH=D+1

PID 3
DEPTH=
D+1

EP 3 855 746 A1

# FIG. 15

# FIG. 16

# FIG. 17

PROCESSOR 1720

MEMORY 1710

1700

# FIG. 18

START

DETERMINE WHETHER TO APPLY AFFINE MODE TO CURRENT BLOCK — S1810

WHEN IT IS DETERMINED THAT AFFINE MODE IS TO BE APPLIED, DETERMINE AFFINE PARAMETER GROUP BASED ON HISTORY-BASED AFFINE PARAMETER GROUP CANDIDATE LIST IN WHICH AFFINE PARAMETER GROUPS OF ONE OR MORE BLOCKS ENCODED IN AFFINE MODE BEFORE CURRENT BLOCK ARE STORED — S1830

PERFORM PREDICTION ON CURRENT BLOCK BASED ON AFFINE PARAMETER GROUP — S1850

ENCODE INFORMATION ABOUT WHETHER TO APPLY AFFINE MODE TO CURRENT BLOCK — S1870

END

# FIG. 19

1900

1920

PROCESSOR

1910

MEMORY

# FIG. 20

START

RECEIVE INFORMATION ABOUT WHETHER TO
APPLY AFFINE MODE TO CURRENT BLOCK — S2010

WHEN INFORMATION ABOUT WHETHER TO APPLY
AFFINE MODE INDICATES THAT AFFINE MODE IS TO BE
APPLIED, DETERMINE AFFINE PARAMETER GROUP
BASED ON HISTORY-BASED AFFINE PARAMETER
GROUP CANDIDATE LIST IN WHICH AFFINE PARAMETER
GROUPS OF ONE OR MORE BLOCKS RECONSTRUCTED
IN AFFINE MODE BEFORE CURRENT BLOCK ARE STORED — S2030

PERFORM PREDICTION ON CURRENT BLOCK
BASED ON AFFINE PARAMETER GROUP — S2050

END

# FIG. 21A

```
┌──────────────────┐        ┌──────────────────┐
│   LOAD HMVP       │───────▶│ DECODE BLOCK WITH │
│ CANDIDATE TABLE   │        │  HMVP CANDIDATE   │
└──────────────────┘        └──────────────────┘
```

UPDATE DECODED MOTION
INFORMATION TO TABLE

# FIG. 21B

EP 3 855 746 A1

# FIG. 22A

# FIG. 22B

$$\begin{cases} v_{0x} = \dfrac{(v_{E1x} - v_{E0x})}{(x_{E1} - x_{E0})}(x_0 - x_{E0}) + \dfrac{(v_{E2x} - v_{E0x})}{(y_{E2} - y_{E0})}(y_0 - y_{E0}) + v_{E0x} \\[3mm] v_{0y} = \dfrac{(v_{E1y} - v_{E0y})}{(x_{E1} - x_{E0})}(x_0 - x_{E0}) + \dfrac{(v_{E2y} - v_{E0y})}{(y_{E2} - y_{E0})}(y_0 - y_{E0}) + v_{E0y} \end{cases}$$

$$\begin{cases} v_{1x} = \dfrac{(v_{E1x} - v_{E0x})}{(x_{E1} - x_{E0})}(x_1 - x_{E0}) + \dfrac{(v_{E2x} - v_{E0x})}{(y_{E2} - y_{E0})}(y_1 - y_{E0}) + v_{E0x} \\[3mm] v_{1y} = \dfrac{(v_{E1y} - v_{E0y})}{(x_{E1} - x_{E0})}(x_1 - x_{E0}) + \dfrac{(v_{E2y} - v_{E0y})}{(y_{E2} - y_{E0})}(y_1 - y_{E0}) + v_{E0y} \end{cases}$$

# FIG. 23

# FIG. 24

S2410

DETERMINE WHETHER CURRENT BLOCK IS
BLOCK TO BE ENCODED FIRST IN PREDETERMINED
AREA IN WHICH CURRENT BLOCK IS INCLUDED

S2430

WHEN CURRENT BLOCK IS BLOCK TO BE ENCODED
FIRST, RESET HISTORY-BASED MOTION VECTOR
CANDIDATE LIST IN WHICH MOTION VECTORS OF BLOCKS
ENCODED BEFORE CURRENT BLOCK ARE STORED AND
PERFORM CURRENT PREDICTION ON CURRENT BLOCK BASED
ON MOTION INFORMATION OF ADJACENT BLOCK TO BLOCK

S2450

WHEN CURRENT BLOCK IS NOT BLOCK TO BE ENCODED
FIRST, PERFORM PREDICTION ON CURRENT BLOCK
BASED ON MOTION INFORMATION OF ADJACENT BLOCK
OF CURRENT BLOCK AND HISTORY-BASED MOTION
VECTOR CANDIDATE LIST

EP 3 855 746 A1

# FIG. 25

DETERMINE WHETHER CURRENT BLOCK IS BLOCK TO BE RECONSTRUCTED FIRST IN PREDETERMINED AREA IN WHICH CURRENT BLOCK IS INCLUDED — S2510

WHEN CURRENT BLOCK IS BLOCK TO BE RECONSCTRUCTED FIRST, RESET HISTORY-BASED MOTION VECTOR CANDIDATE LIST IN WHICH MOTION VECTORS OF BLOCKS RECONSTRUCTED BEFORE CURRENT BLOCK ARE STORED AND PERFORM PREDICTION ON CURRENT BLOCK BASED ON MOTION INFORMATION OF ADJACENT BLOCK TO CURRENT BLOCK — S2530

WHEN CURRENT BLOCK IS NOT BLOCK TO BE RECONSTRUCTED FIRST, PERFORM PREDICTION ON CURRENT BLOCK BASED ON MOTION INFORMATION OF ADJACENT BLOCK TO CURRENT BLOCK AND HISTORY-BASED MOTION VECTOR CANDIDATE LIST — S2550

EP 3 855 746 A1

EP 3 855 746 A1

# FIG. 26

A B      C D ----- CTU BOUNDARY

CURRENT BLOCK

59

# FIG. 27A

# FIG. 27B

# FIG. 28

# EP 3 855 746 A1

| INTERNATIONAL SEARCH REPORT | International application No. |
|---|---|
| | **PCT/KR2019/012159** |

**A. CLASSIFICATION OF SUBJECT MATTER**

*H04N 19/53(2014.01)i, H04N 19/109(2014.01)i, H04N 19/105(2014.01)i, H04N 19/176(2014.01)i*

According to International Patent Classification (IPC) or to both national classification and IPC

**B. FIELDS SEARCHED**

Minimum documentation searched (classification system followed by classification symbols)
H04N 19/53; H04N 11/02; H04N 19/105; H04N 19/162; H04N 19/51; H04N 19/56; H04N 7/32; H04N 19/109; H04N 19/176

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: decoding, motion, vector, history, candidate, list

**C. DOCUMENTS CONSIDERED TO BE RELEVANT**

| Category* | Citation of document, with indication, where appropriate, of the relevant passages | Relevant to claim No. |
|---|---|---|
| X | YANG, Haitao et al. Description of Core Experiment 4 (CE4): Inter prediction and motion vector coding. JVET-K1024-v2. Joint Video Experts Team (JVET) of ITU-T SG 16 WP 3 and ISO/IEC JTC 1/SC 29/WG 11. 11th Meeting: Ljubljana, SI. 09 August 2018, pages 1-45 See pages 4, 9, 13-15, 32. | 1-15 |
| A | US 8498330 B2 (KAM, Yan Ho et al.) 30 July 2013 See claims 1, 4; and figure 1. | 1-15 |
| A | WO 2015-138008 A1 (EUCLID DISCOVERIES, LLC.) 17 September 2015 See claims 1, 23, 32-33; and figure 8. | 1-15 |
| A | JP 2008-035134 A (MATSUSHITA ELECTRIC IND. CO., LTD.) 14 February 2008 See claims 1-14; and figures 1-2. | 1-15 |
| A | KR 10-2011-0094765 A (SAMSUNG ELECTRONICS CO., LTD.) 24 August 2011 See claims 1-8; and figure 1. | 1-15 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 JANUARY 2020 (07.01.2020) | **07 JANUARY 2020 (07.01.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2019/012159**

| Patent document cited in search report | Publication date | Patent family member | Publication date |
|---|---|---|---|
| US 8498330 B2 | 30/07/2013 | CN 101815215 A | 25/08/2010 |
| | | CN 101815215 B | 10/10/2012 |
| | | US 2010-0329341 A1 | 30/12/2010 |
| WO 2015-138008 A1 | 17/09/2015 | CA 2942336 A1 | 17/09/2015 |
| | | US 2015-0256850 A1 | 10/09/2015 |
| | | US 9621917 B2 | 11/04/2017 |
| JP 2008-035134 A | 14/02/2008 | CN 101115208 A | 30/01/2008 |
| | | CN 101115208 B | 21/12/2011 |
| | | JP 4787100 B2 | 05/10/2011 |
| | | US 2008-0025396 A1 | 31/01/2008 |
| | | US 8144789 B2 | 27/03/2012 |
| KR 10-2011-0094765 A | 24/08/2011 | KR 10-1630688 B1 | 16/06/2016 |
| | | US 2011-0200107 A1 | 18/08/2011 |
| | | US 8724704 B2 | 13/05/2014 |

Form PCT/ISA/210 (patent family annex) (January 2015)